# EUROPEAN PATENT APPLICATION

(11) **EP 1 386 716 A1**
(43) Date of publication of application: **04.02.2004**
(21) Application number: 03077414.5
(22) Date of filing: 01.08.2003
(51) Int. Cl.: B29C 45/16

(54) **Moulding method and mould for such a method**

(30) Priority: 02.08.2002 IT MI20021760
(71) Applicant: Romagnani Stampi S.r.l., 20096 Pioltello (Milan) (IT)
(72) Inventor: Galletti, Davide, 23870 Cernusco Lombardone (Lecco) (IT)
(74) Representative: De Gregori, Antonella

(57) **Abstract**

A moulding method and a mould for carrying out said method, carried out by a mould for a conventional injection press, realising a piece in one or more injectable materials, the mould comprising a mobile part and a fixed part, on such mobile and fixed parts being realised respective impressions, which define, when the mobile part is closed against the fixed part, recesses suitable for receiving the injectable materials in at least two successive injection steps; the method comprises a step of housing a sliding element (20;120,220;320;420;520;620;720;820;920;1020;1120;1220;1320;1420;1520; 1620;1620b;1720;1820;1920;2020) in at least a first recess (16;116;216;316,416;516;616;716;816;916;1016;1116;1216;1316;1416;1516; 1616;1616b;1616c;1716;1816;1916;2016), a first injection step in such a first recess, after which a first part of the piece remains fixed on a surface integral to such a sliding element, a displacement step of such a first part of the piece in a second recess (18;118;218;318;418;518;618;718;818;918;1018;1118;1218;1318;1418;1518; 1618;1718;1818;1918,2018) and then a second injection step in such a second recess.

## Description

The present invention refers to a moulding method, carried out by a mould for a conventional injection press, suitable for cost-effectively realising a piece in one or more injectable materials.

The invention also concerns a relative mould of such a method.

In the field of injection moulding of thermoplastic materials or other injectable materials, even metals (in so-called "Metal Injection Moulding"), applications which use the injection in sequence of one or more materials are taking on ever increasing importance.

Amongst such applications, the most common refer to products realised in two materials using the same mould and the same succession of production steps. Typical examples are: beakers and cutlery with the graspable part in thermoplastic rubber, technical items together with relative gaskets, soft on hard anti-slide grips, panels, which may be transparent, with relative frame and gasket, etc.

With time moulds intended for these moulding applications have undergone an evolution which has led to the realisation of tools intended for the production of the relative obtainable products.

Moreover, with the moulds conceived for this technology, it is also possible to mount, glue, join or seal the pieces obtained by the tools themselves.

The state of the art of these tools can be summed up in the types which are indicated below.

A first type is the so-called rotary mould in which one of the two planes of the press is equipped with a rotary table intended for the purpose. On such a table a semi-mould is mounted which rotates cyclically allowing the realisation, for every cycle, of a first portion which stays in the mould and a second portion on which a second material is over-moulded: at this point the resulting piece can be removed.

This configuration is valid as a reference type for two or more materials and many impressions, and can be considered the most widespread method.

A second type is that in which a rotary mould, with similar functions to the previous one, has kinematisms inside the moulding tool itself. It is used when the piece to be produced is shaped in such a way as to be realised just by replacing both the fixed side and the mobile side of the press, or else also when the press on which the mould will be mounted is without a rotary table. In such a case a fundamental group of the tool shall rotate, for example, like an element or impression carrying plate.

A third type is a mould rotating on an axis perpendicular to the axis of the press, with functions similar to the previous one: inside the mould kinematisms are foreseen which move a fundamental group like for example an intermediate element on which the impressions are mounted.

A fourth type is that comprising a mould which can slide back, freeing a recess part, after a first injection, to be filled in a subsequent step. In this case the sliding back takes place during the cycle of the press.

A fifth type includes a translating mould, with a similar function and cycle to the rotary one. With such a mould, in which there is a displacement step of a semi-mould, in general two different pieces realised in the mould itself are joined, sealing or joining them with a material which is placed between them. In this way it is thus also possible to realise hollow bodies.

A sixth type comprises a translating mould equipped with trolleys. With such a mould, the moulding method is identical in type and function as the previous one, but in this case some parts to be joined can be supplied by trolleys which feed the translated semi-mould part.

As stated, all of the mould types described above are dedicated moulds, realised for the purpose of producing a determined piece.

Therefore, they involve a large initial investment and, despite this, often the productivity obtained with them is not optimal.

The purpose of the present invention is therefore that of avoiding the drawbacks mentioned previously and in particular that of indicating a moulding method, carried out by a mould for a conventional injection press, suitable for cost-effectively realising a piece in one or more injectable materials, and that of realising a relative mould for such a method which allow details to be produced which in the prior art are realised through moulding presses, in general equipped with specific tools, or else through the assembly of components generally in different materials.

Another purpose of the present invention is that of indicating a moulding method, carried out by a mould for a conventional injection press, suitable for cost-effectively realising a piece in one or more injectable materials, and that of realising a relative mould for such a method which allow substantial reductions in production costs.

Another purpose of the present invention is that of indicating a moulding method, carried out by a mould for a conventional injection press, suitable for cost-effectively realising a piece in one or more injectable materials, and that of realising a type of relative moulds for such a method which are particularly reliable, simple and functional.

These and other purposes according to the present invention are accomplished by indicating a moulding method, carried out by a mould for a conventional injection press, suitable for cost-effectively realising a piece in one or more injectable materials, as outlined in claim 1.

In claim 6 a relative mould for such a method is defined.

Further characteristics are foreseen in the other claims.

The characteristics and advantages of a moulding method, carried out by a mould for a conventional injection press, suitable for cost-effectively realising a piece in one or more injectable materials, and of a relative mould for such a method, according to the present invention, shall become clearer from the following description, given as an example and not for limiting purposes, referring to the attached schematic drawings in which:
figure 1 is a section view of a first embodiment of a mould according to the invention;
figure 2 is a plan view of a mobile part of the mould of figure 1;
figure 3 is a plan view of a fixed part of the mould of figure 1;
figures 4a, 4b, 4c, 4d, 4e, 4f and 4g show a section view of the mould of figure 1 in successive treatment steps;
figure 5 is a plan view of a mobile part of a second embodiment of a mould according to the invention;
figure 6 is a section view of a third embodiment of a mould according to the invention;
figure 7 is a plan view of a mobile part of the mould of figure 6;
figure 8 is a plan view of a fixed part of the mould of figure 6;
figure 9a is a section view of a fourth embodiment of a mould according to the invention;
figure 9b is a plan view of a mobile part of the mould of figure 9a;
figure 9c is a plan view of a fixed part of the mould of figure 9a;
figure 10a is a cross-section of a fifth embodiment of a mould according to the invention;
figure 10b is a longitudinal section of a fifth embodiment of a mould according to the invention;
figure 10c is a plan view of a mobile part of the mould of figure 10a during a first semi-cycle;
figure 10d is a plan view of a mobile part of the mould of figure 10a during a second semi-cycle;
figures 10e, 10f, 10g, 10h, 10i and 101 show a
longitudinal section of the mould of figure 10b in successive treatment steps;
figure 11a is a plan view of a mobile part of a sixth embodiment of a mould according to the invention, during a first semi-cycle;
figure 11b is a plan view of the mobile part of the mould of figure 11a, during a second semi-cycle;
figure 12a is a plan view of a mobile part in a seventh embodiment of a mould according to the invention, during a first semi-cycle;
figure 12b is a plan view of the mobile part of the mould of figure 12a, during a second semi-cycle;
figure 13a is a section view of an eighth embodiment of a mould according to the invention;
figure 13b is a plan view of a mobile part of the mould of figure 13a;
figure 13c is a plan view of a fixed part of the mould of figure 13a;
figures 13d, 13e, 13f, 13g, 13h and 13i show a section view of the mould of figure 13a in successive treatment steps;
figure 14a is a cross section of a ninth embodiment of a mould according to the invention;
figures 14b, 14c, 14d, 14e, 14f and 14g show a cross section of the mould of figure 14a in successive treatment steps;
figure 15 is a plan view of a mobile part of a tenth embodiment of a mould according to the invention;
figures 16a, 16b and 16c show a half cross section of an eleventh embodiment of a mould according to the invention, in successive treatment steps;
figure 17a is a section view of a twelfth embodiment of a mould according to the invention;
figure 17b is a plan view of a mobile part of the mould of figure 17a;
figure 17c is a plan view of a fixed part of the mould of figure 17a;
figures 17d, 17e, 17f and 17g show a section view of the mobile part of the mould of figure 17a in successive treatment steps, in which a displacement of a trolley takes place;
figure 18a is a section view of a thirteenth embodiment of a mould according to the invention;
figures 18b, 18c, 18d, 18e and 18f show a section view of the mould of figure 18a, in successive treatment steps;
figure 19 is a section view of a fourteenth embodiment of a mould according to the invention;
figure 20a is a section view of a fifteenth embodiment of a mould according to the invention;
figures 20b, 20c, 20d, 20e, 20f and 20g show a section view of the mould of figure 20a, in successive treatment steps;
figures 21a, 21b, 21c, 21d, 21e, 21f, 21g and 21h show a cross section of a sixteenth embodiment of a mould according to the invention, in successive treatment steps;
figure 22a is a section view of a seventeenth embodiment of a mould according to the invention, at the start of treatment;
figure 22b is a plan view of a mobile part of the mould of figure 22a;
figure 22c is a plan view of a fixed part of the mould of figure 22a;
figure 22d shows a section view of the mould of figure 22a in a second treatment semi-cycle;
figures 22e and 22f are section views of alternative embodiments of the mould of figure 22a;
figure 23a is a section view of an eighteenth embodiment of a mould according to the invention, at the start of treatment;
figure 23b is a plan view of a mobile part of the mould of figure 23a;
figure 23c is a plan view of a fixed part of the mould of figure 23a;
figure 23d shows a section view of the mould of figure 23a in a second treatment semi-cycle;
figure 24a is a section view of a nineteenth embodiment of a mould according to the invention, at the start of treatment;
figure 24b is a plan view of a mobile part of the mould of figure 24a;
figure 24c is a plan view of a fixed part of the mould of figure 24a;
figure 24d show a section view of the mould of figure 24a in a second treatment semi-cycle;
figure 25a is a section view of a twentieth embodiment of a mould according to the invention, at the start of treatment;
figure 25b is a plan view of a mobile part of the mould of figure 25a;
figure 25c is a plan view of a fixed part of the mould of figure 25a;
figure 25d shows a section view of the mould of figure 25a in a second treatment semi-cycle;
figure 26a is a cross section of a twenty-first embodiment of a mould according to the invention;
figure 26b is a plan view of a mobile part of the mould of figure 26a;
figure 26c is a plan view of a fixed part of the mould of figure 26a;
figure 26d shows a longitudinal section of the mould of figure 26a in a first treatment semi-cycle;
figure 26e shows a longitudinal section of the mould of figure 26a in a second treatment semi-cycle;
figures 27a, 27b, 27c, 27d, 27e, 27f, 27g, 27h, 27i, 27j, 27k, 271, 27m, 27n, 27o, 27p, 27q, 27r and 27t respectively show finished pieces produced with the twenty-one embodiments of a mould according to the present invention.

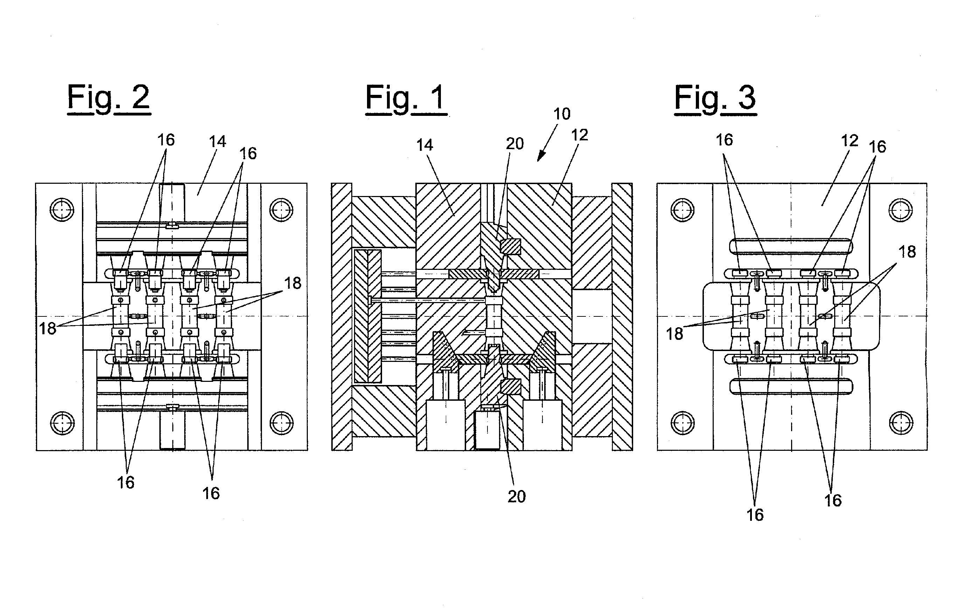

With reference initially to figures 1, 2 and 3, a mould is shown, wholly indicated with 10, for a conventional injection press, suitable for cost-effectively realising a piece in one or more injectable materials.

The mould 10 comprises two parts and more precisely a fixed part 12, which is attached to a fixed side of the press, and a mobile part 14, which is fixed to a mobile side of the press.

On the fixed part 12 and on the mobile part 14 of the mould 10 respective impressions are realised, which define, when the mobile part 14 of the mould 10 is closed against the fixed part 12, recesses 16 and 18 (in the example they are four in number) suitable for receiving the respective injectable materials.

A first recess 16 comprises at least one sliding element 20. In the example of figure 1 such elements 20 are two in number and are equipped with translating movement with respect to the fixed part 12 of the mould 10. In the specific example the sliding takes place along an axis substantially perpendicular to a longitudinal axis of the mould 10.

The sliding element 20, in its movement, successively reaches a second recess 18.

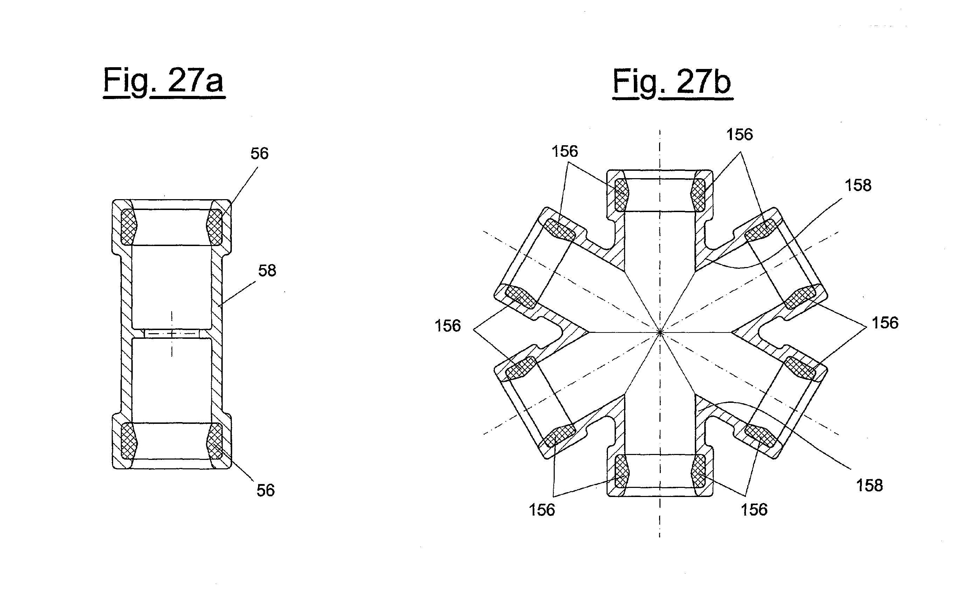

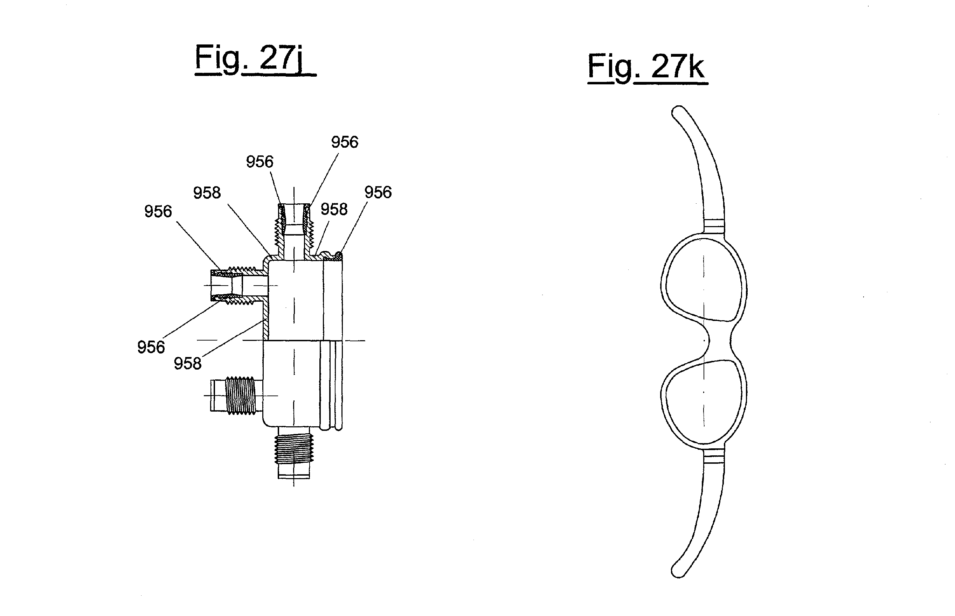

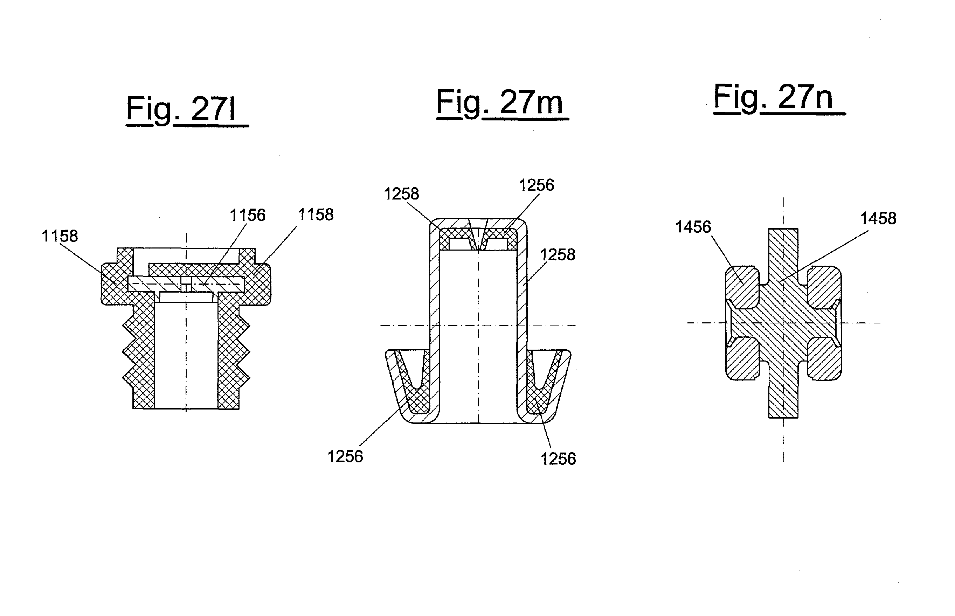

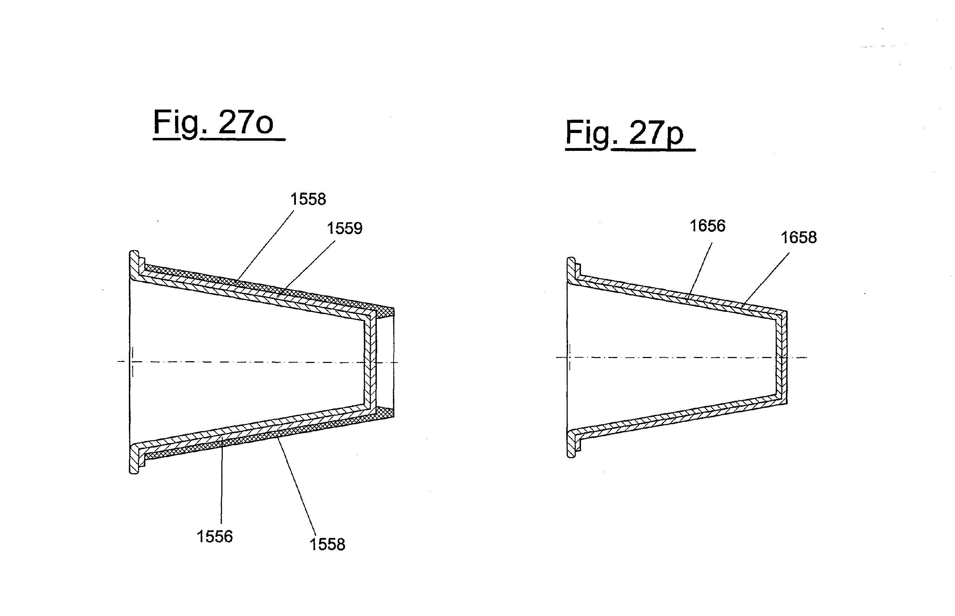

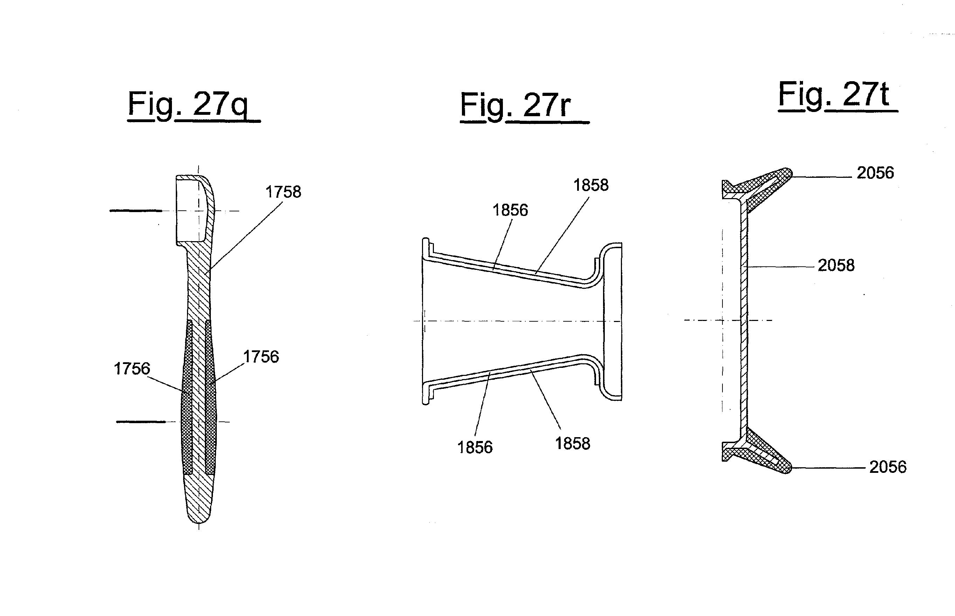

With the mould 10 shown in figures 1, 2 and 3 a piece is realised as a sleeve with inner gaskets, shown in figure 27a and where it is possible to see first parts 56 of finished part, realised in the first recesses 16, and second parts 58, realised in the second recesses 18.

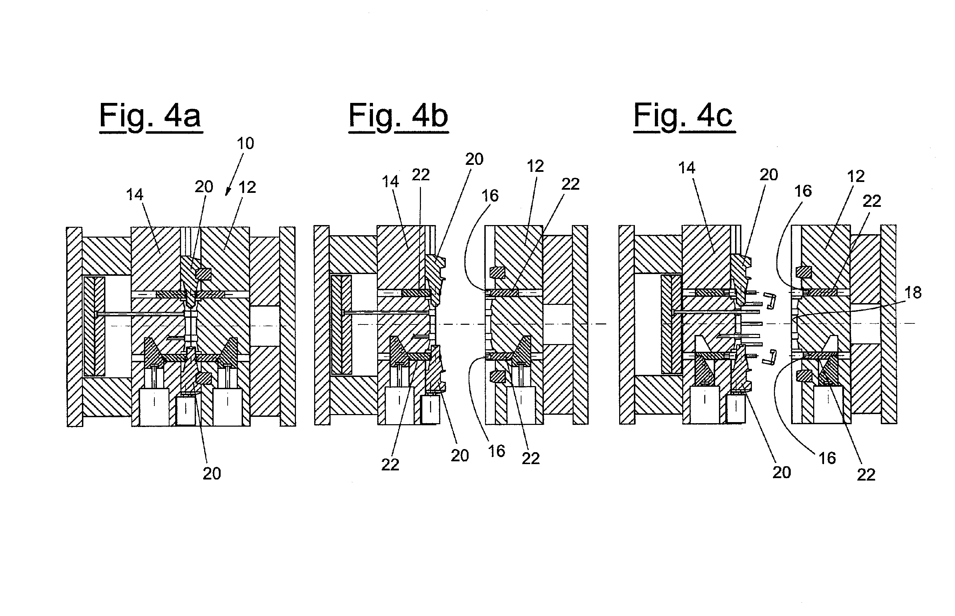

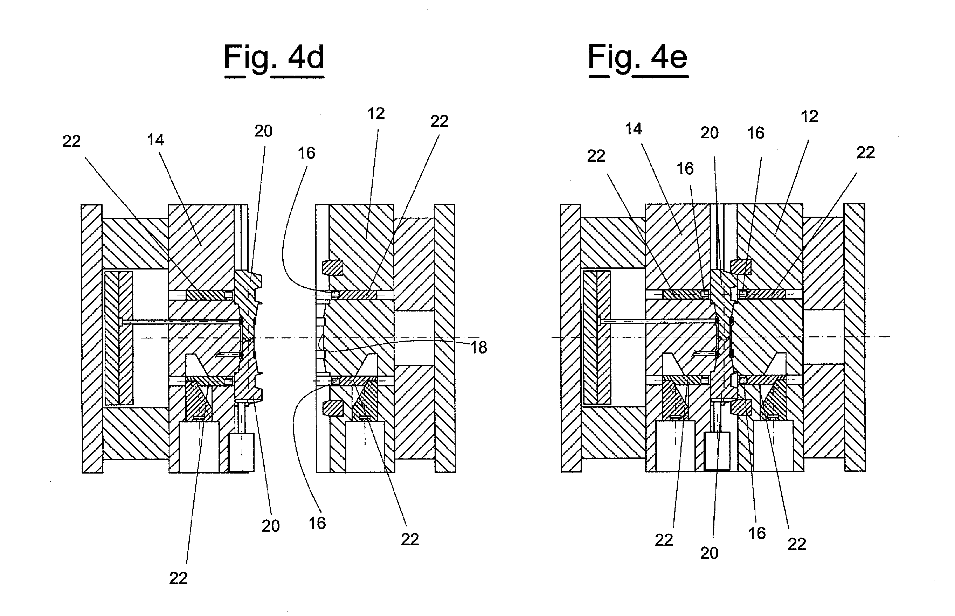

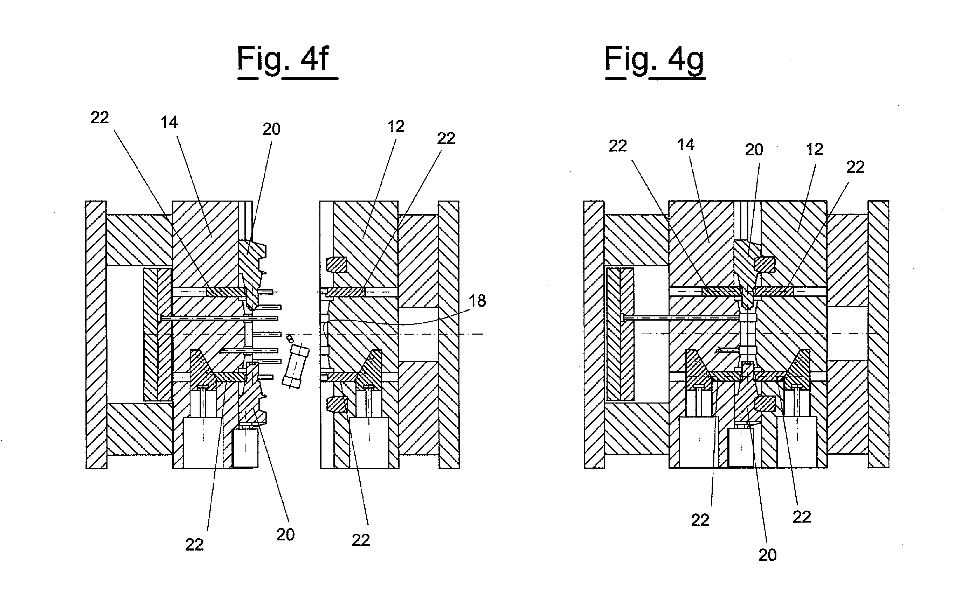

The mould 10 uses a moulding method which comprises a succession of steps which are shown in sequence in figures 1, 4a, 4b, 4c, 4d, 4e, 4f and 4g.

In figure 1 it is possible to see a section view of the mould 10 at the start of a production cycle: on the sliding elements 20 are externally rested inserts 22, to define first recesses 16.

In figure 4a a first injection of an injectable material in such first recesses 16 takes place, to realise the inner gaskets, generally in thermoplastic elastomer.

After a cooling step of such an injected material, in figure 4b an opening step of the mould 10 is shown.

In figure 4c it is possible to see a removal step of feedheads with extractors and an opening step of inserts 22 which formed the first recesses 16.

Figure 4d shows a re-entry step of the extractors and a displacement step of the sliding elements 20, to define a second recess 18.

In figure 4e it is possible to see a second injection step of an injectable material in such a second recess 18, which takes place after having previously closed the mould 10.

After cooling of the injected material in the second recess 18, the mould 10 is opened and, as can be seen in figure 4f, there is a displacement of the sliding elements 20 in the position of figure 1, also with removal of feedheads and of the finished piece. The finished piece is thus an element where the first injected material is connected to the second injected material, realising a sleeve with gaskets.

After the inserts 22 are once again made to advance and the extractors are slid back, in figure 4g a subsequent closing step of the mould 10 is shown, which in practice coincides with figure 1 of the start of the cycle.

With the steps just described, the sliding elements 20, mounted on sliding trolleys, carry the first injected and cooled materials into the second recess 18, where a subsequent injection step takes place.

It should be highlighted how in figure 4f the trolleys, on which the sliding elements 20 are mounted, move back sliding off the sliding elements 20 themselves from the gaskets.

Basically, it is thus possible to synthesise the steps of the moulding method according to the invention, carried out by a mould for a conventional injection press, suitable for cost-effectively realising a piece in one or more injectable materials:
- a step of housing a sliding element 20 in at least one first recess 16;
- a first injection step in such a first recess 16, after which a first part 56 of such a piece remains fixed on a surface integral to said sliding element 20;
- a displacement step of such a first part 56 of this piece in a second recess 18, through translating movement of such a sliding element 20 with respect to such a fixed part 12 of the mould 10;
- a second injection step in such a second recess 18.

It should also be highlighted that a first part 56 of the pieces produced with a mould 10 according to the invention can be moulded directly on an outer surface of the sliding element 20 or else on a surface in any case integral with such a sliding element 20, such as an insert (or portion thereof), metal or otherwise. It is thus possible to foresee steps of arranging, manually or with manipulators, inserts on such a sliding element 20, as well as in recesses of such a mould.

Moreover, it is also possible to foresee steps for carrying out various operations complementing the moulding operation, such as labelling, tampography, etc.

It is clear that further injection steps in further recesses, besides the first and second recesses 16 and 18, can also be foreseen.

It should also be noted that, given the small inner side of the sleeve, to realise this piece with known technologies it would have been necessary to use a dedicated rotary mould.

Consequently, with the same size, a complex tool would be realised with trolleys on a rotary plate which is not very productive.

The method described above, applied to this type of elements, allows productivity many times greater.

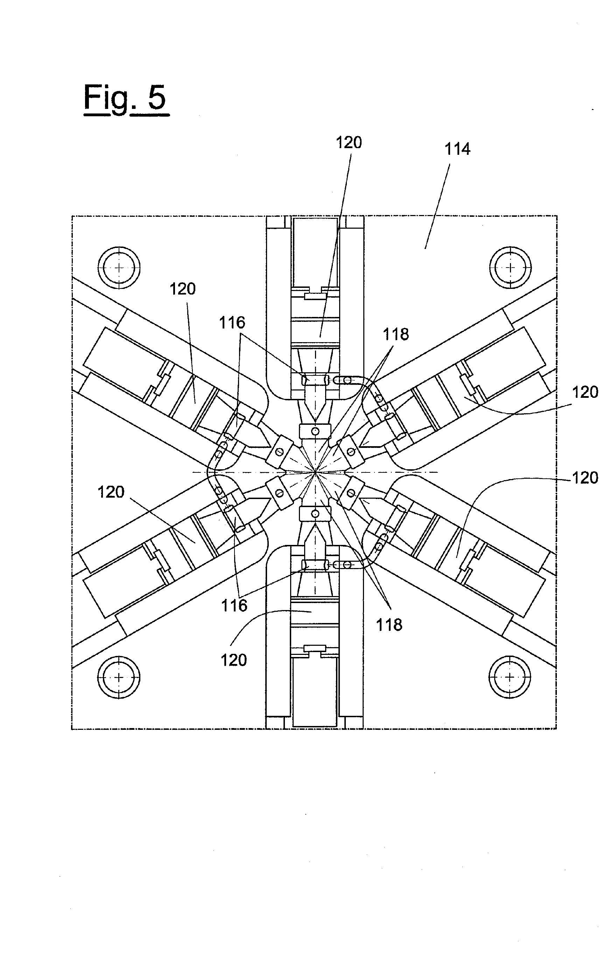

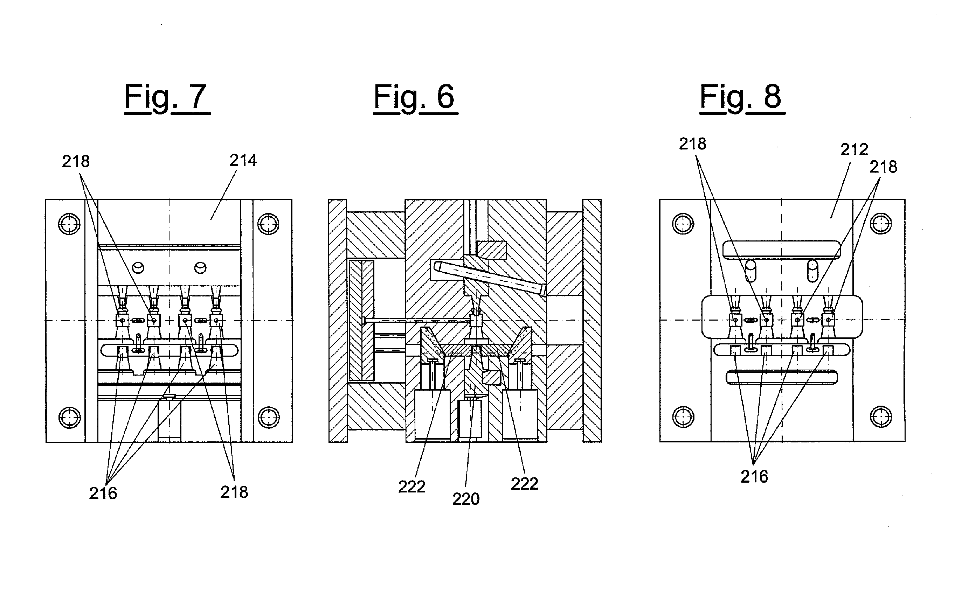

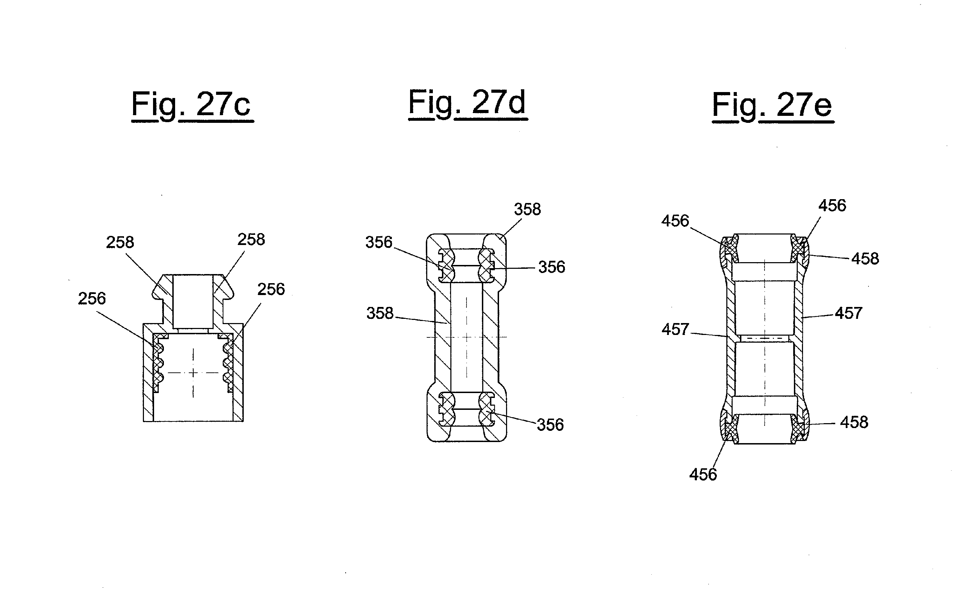

In figure 5 it is possible to see a second embodiment of a mould 110 according to the invention, where the components which are the same as and/or equivalent to those illustrated in figure 2 carry the same reference numerals increased by 100. In practice, this is a variant of the mould 10 which allows a sleeve with six inputs to be realised, which is shown in figure 27b. Figures 6, 7 and 8 illustrate a third possible practical embodiment of a mould 210 according to the invention, where the components which are the same as and/or equivalent to those illustrated in figures 1, 2 and 3 carry the same reference numerals increased by 200. In this example, a body is produced equipped with an inner gasket similar to a sealing connector, which is shown in figure 27c.

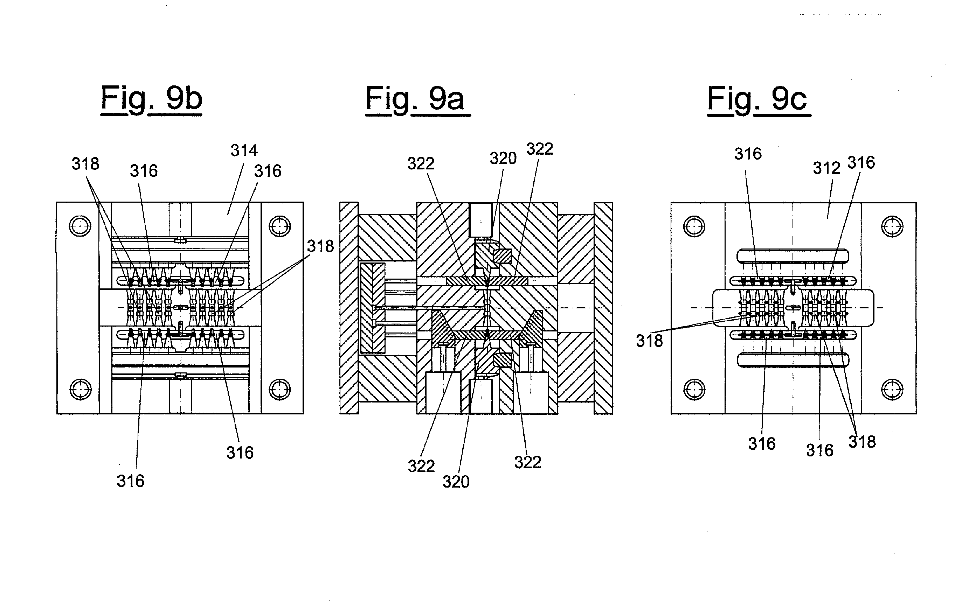

In figures 9a, 9b and 9c a fourth embodiment of a mould 310 according to the invention is shown, where the components which are the same as and/or equivalent to those illustrated in figures 1, 2 and 3 carry the same reference numerals increased by 300. In this variant a sleeve is produced in series, shown in figure 27d and able to be realised in very small sizes and similar to an aid for sealably joining tubes or electrical wires.

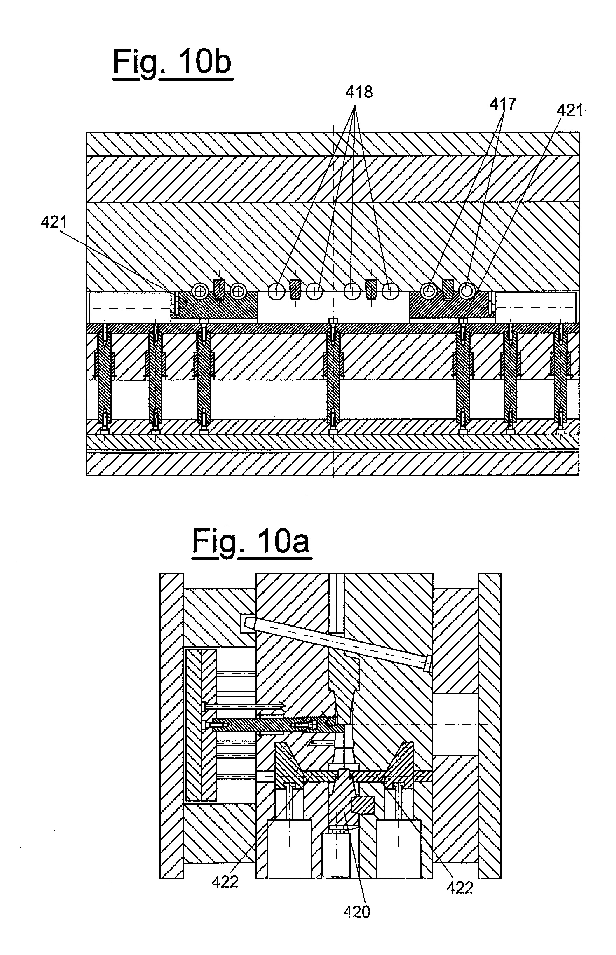

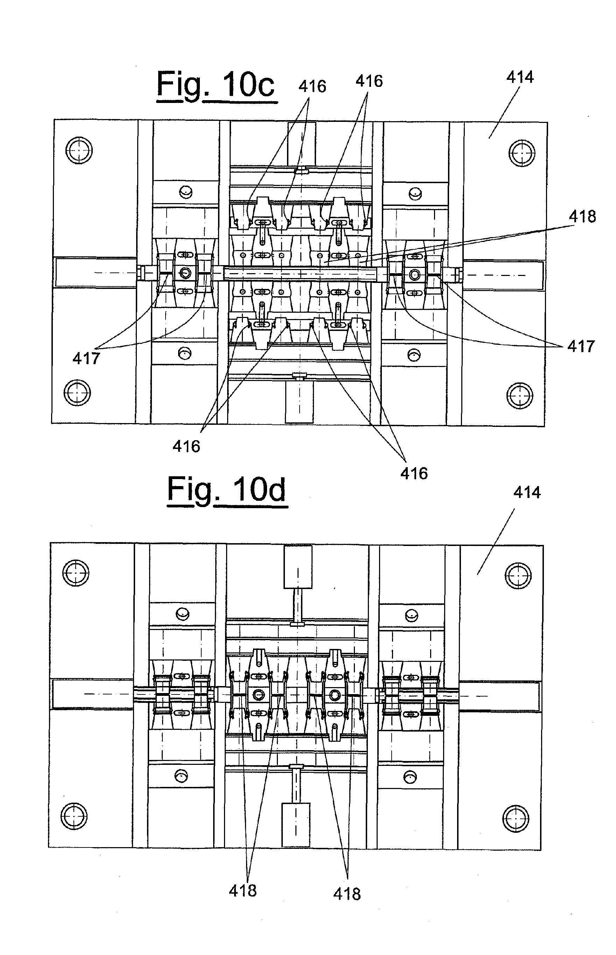

In figures 10a, 10b, 10c and 10d a fifth embodiment of a mould 410 according to the invention is shown, where the components which are the same as and/or equivalent to those illustrated in figures 1, 2 and 3 carry the same reference numerals increased by 400. This variant is an evolution of the mould 10 of figure 1. In this case a sleeve is realised in five parts, due to the particular configuration of the gaskets: such a sleeve is shown in figure 27e.

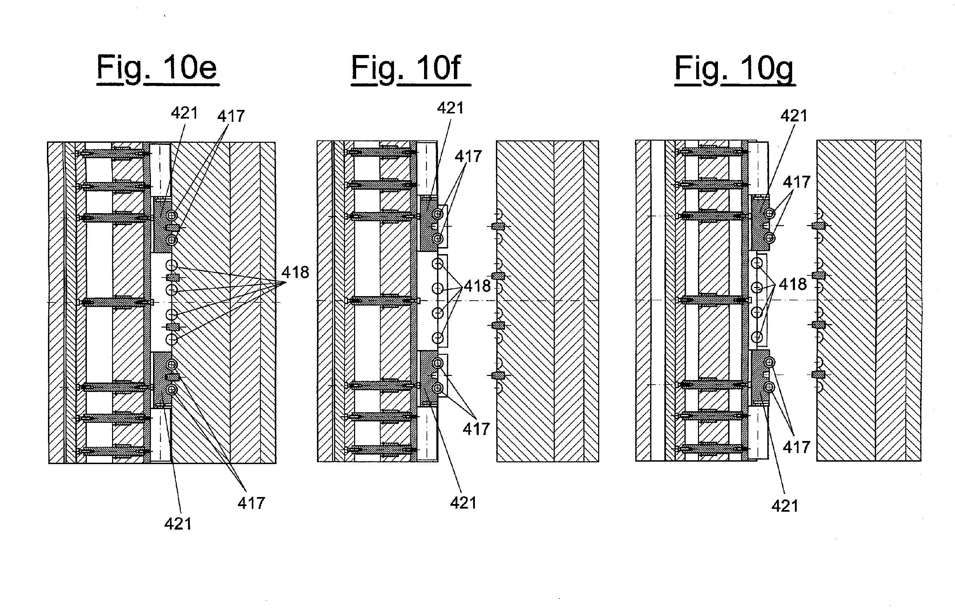

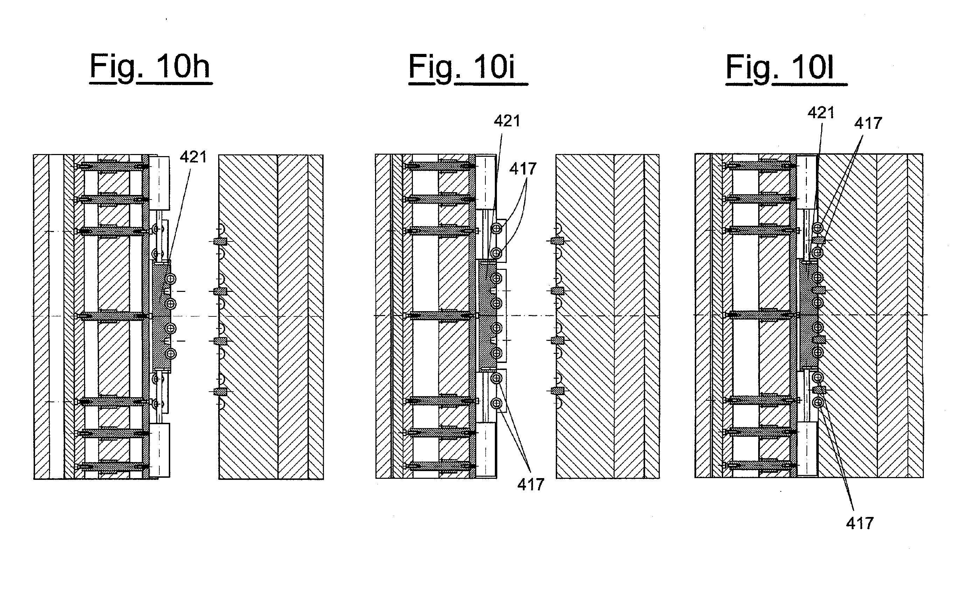

More precisely, first of all, in a first semi-cycle, gaskets are moulded in first recesses 416 and a central part is moulded in further recesses 417 of sleeves (possibly in two different materials), as can be seen in figures 10e, 10f and 10g. Then, in the subsequent semi-cycle, as is shown in figures 10h, 10i and 101, the central parts are conveyed through a guided insert 421, where such further recesses are housed 417, the insert being connected to a table in the subsequent position near to the second recesses 418. Then, on the gaskets, pressed against a central part of the sleeve, parts are overmoulded which stably connect the components. In figure 27e first finished piece parts 456, further parts 457, realised in the further recesses 417, and second parts 458 can be seen.

It should be noted that in this step the sleeve is kept empty inside and is thus like a hollow body.

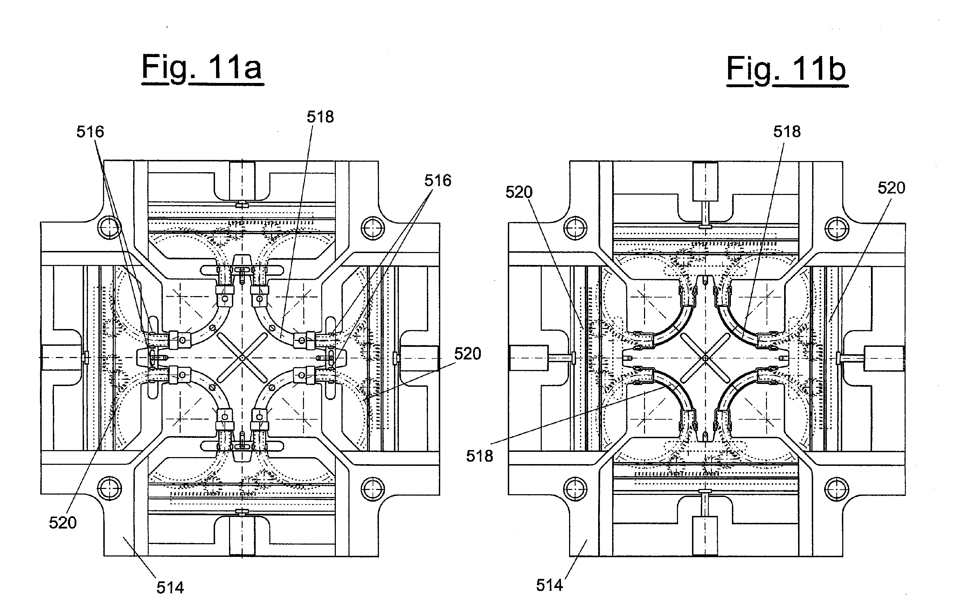

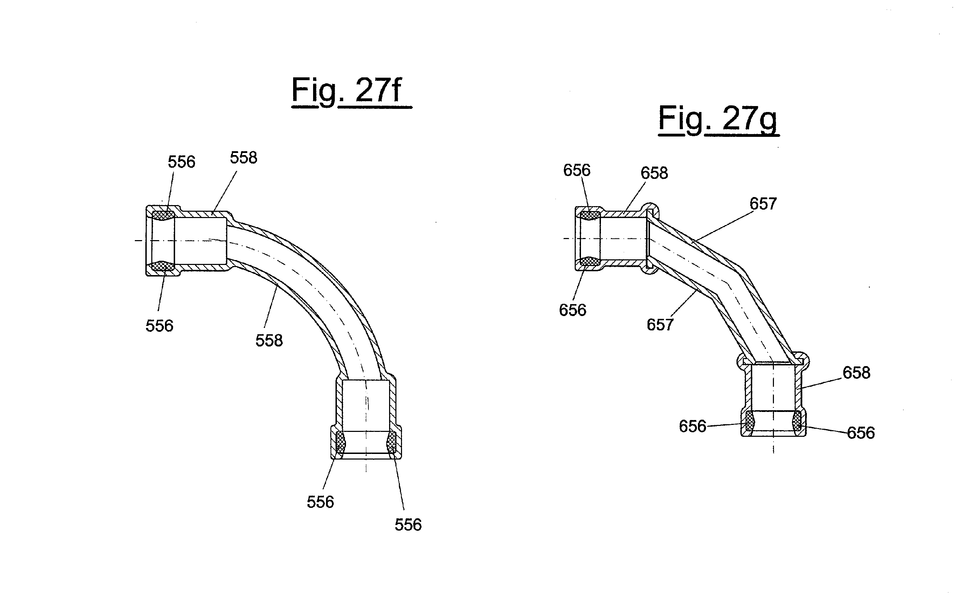

In figures 11a and 11b a sixth embodiment of a mould 510 according to the invention is illustrated, where the components which are the same as and/or equivalent to those illustrated in figures 1, 2 and 3 carry the same reference numerals increased by 500. In this variant a sleeve is produced of the same type as the one realised with the mould 10 of figure 1, with the sole difference that this time it has a curved shape. Such a finished piece is shown in figure 27f.

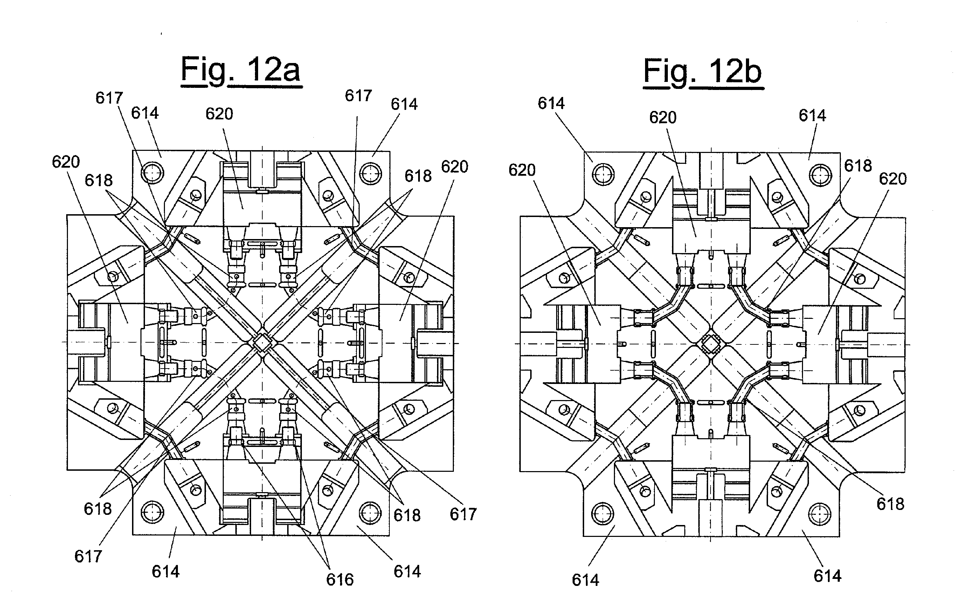

In figures 12a and 12b a seventh embodiment of a mould 610 according to the invention is illustrated, where the components which are the same as and/or equivalent to those illustrated in figures 10c and 10d carry the same reference numerals increased by 200. In this variant a curved sleeve is produced obtained from many pieces overmoulded with a procedure similar to the one explained for the mould 410 of figure 10a. Such a finished piece is shown in figure 27g.

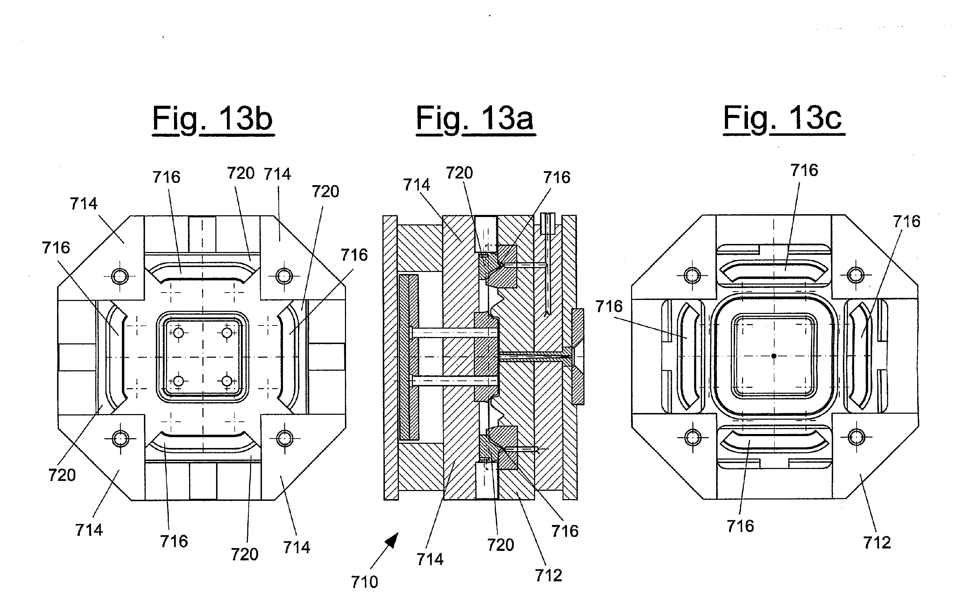

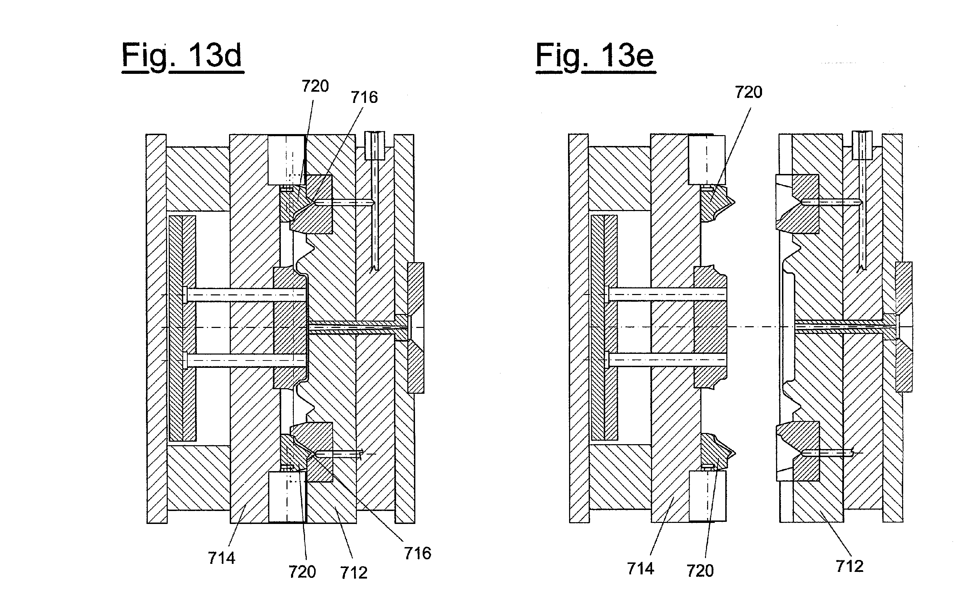

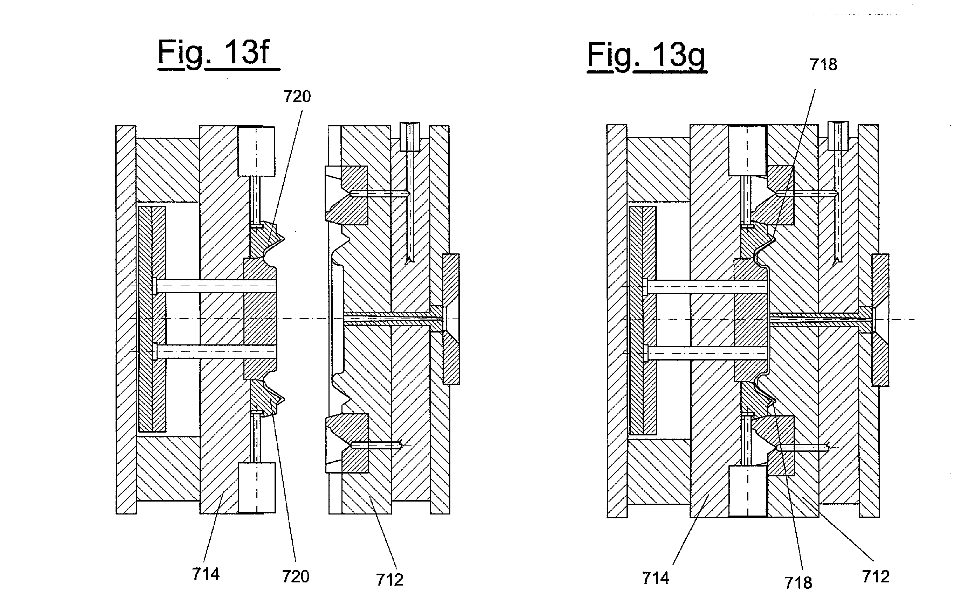

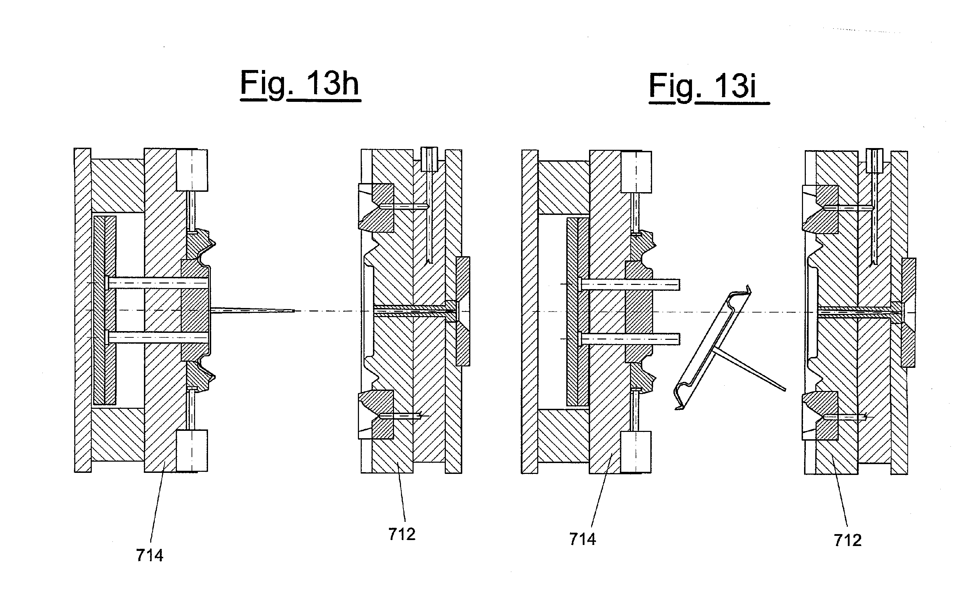

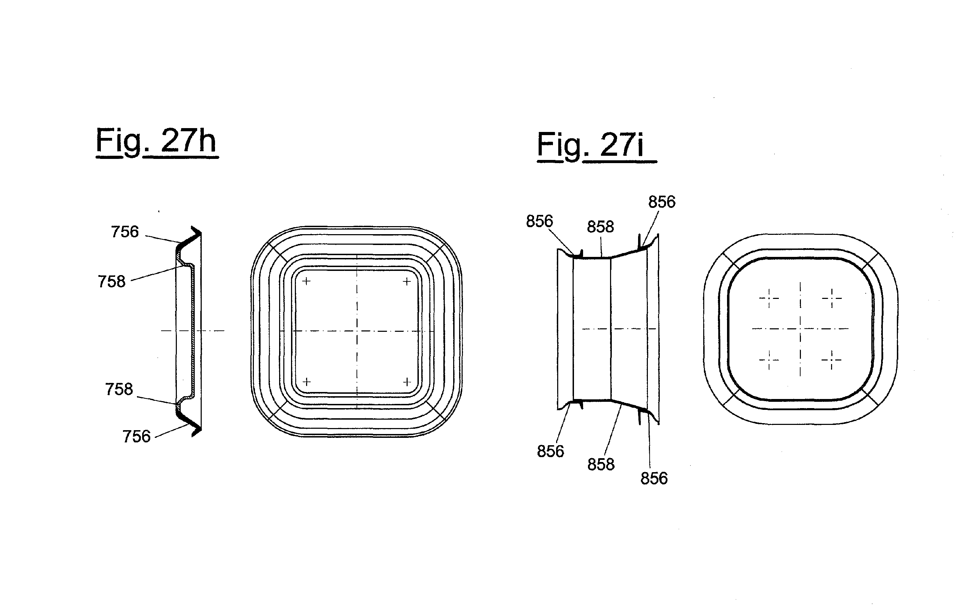

In figures 13a, 13b and 13c an eighth embodiment of a mould 710 according to the invention is illustrated, where the components which are the same as and/or equivalent to those illustrated in figures 1, 2 and 3 carry the same reference numerals increased by 700. With this mould 710 a flat surface is realised equipped with side gaskets: such a finished piece is shown in figure 27h. In a first step perimetric pieces are moulded and in the second step the flat surface is moulded, as shown by the succession of figures 13d, 13e, 13f, 13g, 13h and 13i. This type of piece is usually realised with rotary moulds or moulds with sliding backwards of a part to be fed in the second injection.

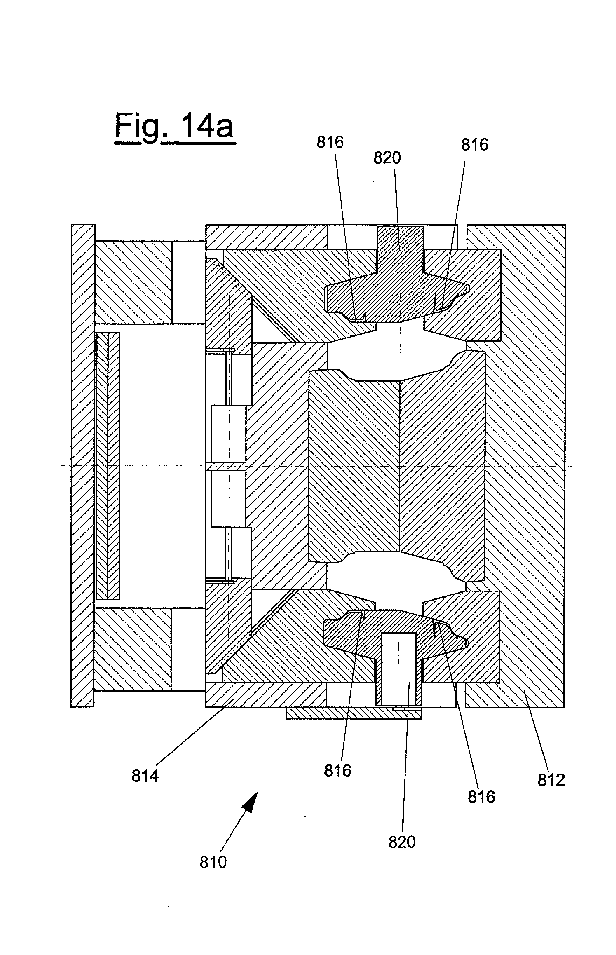

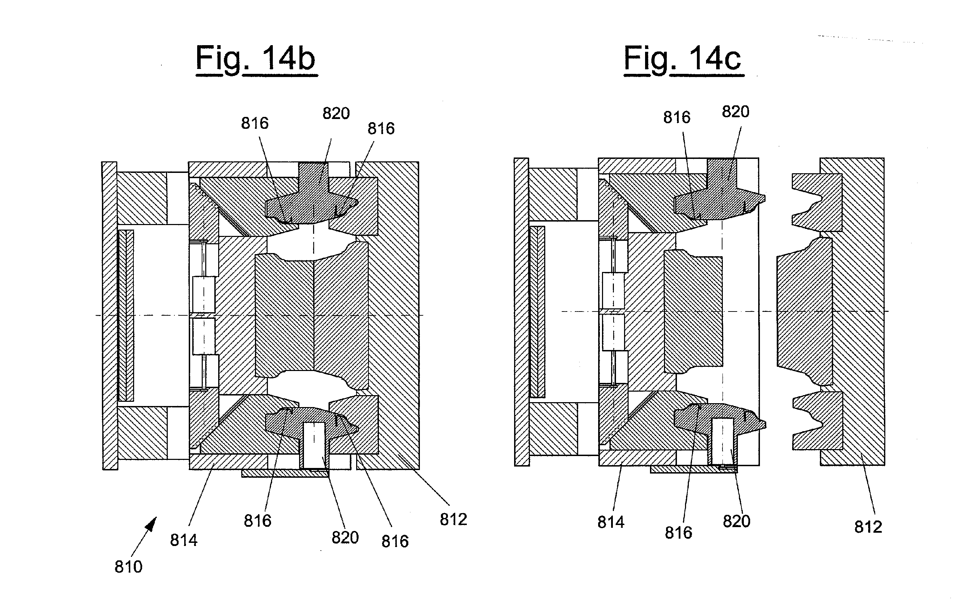

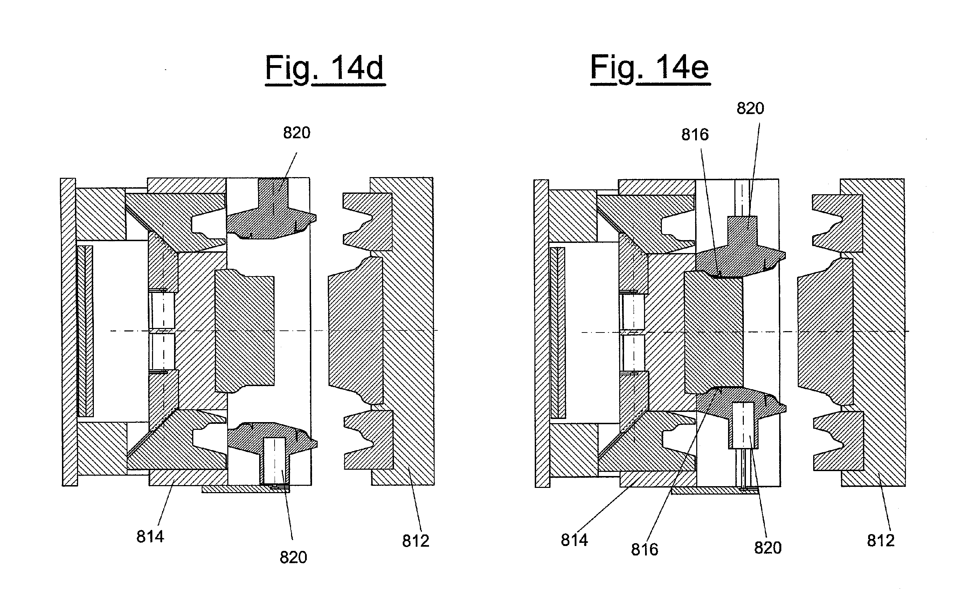

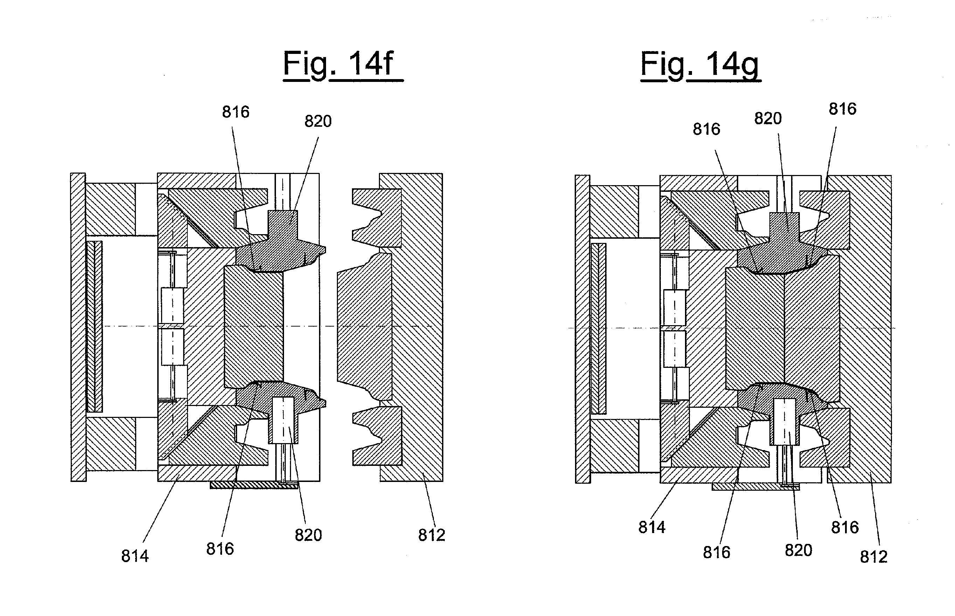

In figure 14a a ninth embodiment of a mould 810 according to the invention is illustrated, where the components which are the same as and/or equivalent to those illustrated in figures 1, 2 and 3 carry the same reference numerals increased by 800. With this mould 810 a flat surface similar to the one produced with the mould 710 of figure 13, but having a framed box-shaped structure, is realised: such a finished piece is shown in figure 27i. It should be noted that the process allows the perimetric parts with a complex form and non-constant section to be realised, as can be seen in figures 14b, 14c, 14d, 14e, 14f and 14g.

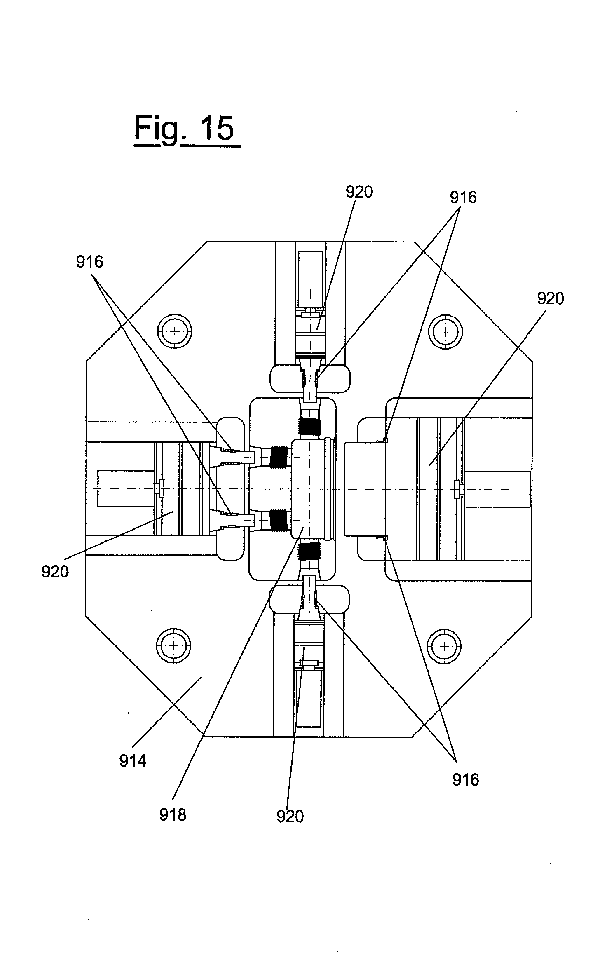

In figure 15 a tenth embodiment of a mould 910 according to the invention is illustrated, where the components which are the same as and/or equivalent to those illustrated in figures 1, 2 and 3 carry the same reference numerals increased by 900. With this mould 910 a distributor is realised equipped with relative gaskets. Such a finished piece is shown in figure 27j.

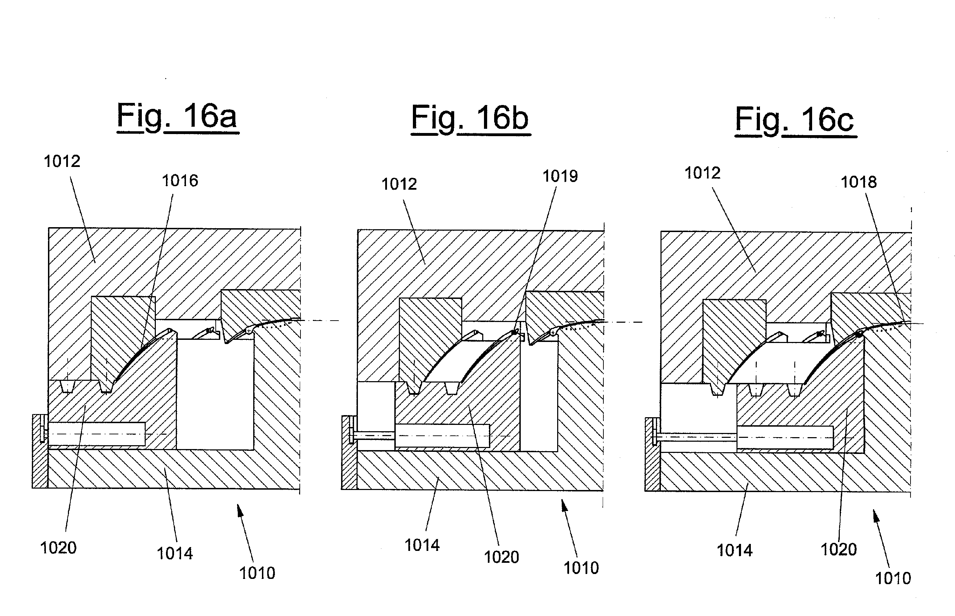

In figures 16a, 16b and 16c an eleventh embodiment of a mould 1010 according to the invention is illustrated, where the components which are the same as and/or equivalent to those illustrated in figures 1, 2 and 3 carry the same reference numerals increased by 1000. With this mould 1010 an eyeglass frame is realised complete with arms and relative hinges with an elastic joint: such a finished piece is shown in figure 27k.

It should be noted that in this case the sliding element 1020 takes up three different positions: in figure 16a the sliding element 1020 realises a first recess 1016, in figure 16b the sliding element 1020 defines a further recess 1019 and in figure 16c the sliding element 1020 forms a second recess 1018. It should be specified that in figure 27k first finished piece parts 1056, further parts 1059, realised in the further recess 1019, and second parts 1058 can be seen.

The technology would furthermore allow the steps to be implemented, for example also gaining lenses, for example made from poly(methyl metacrylate) PMMA, from the sequence.

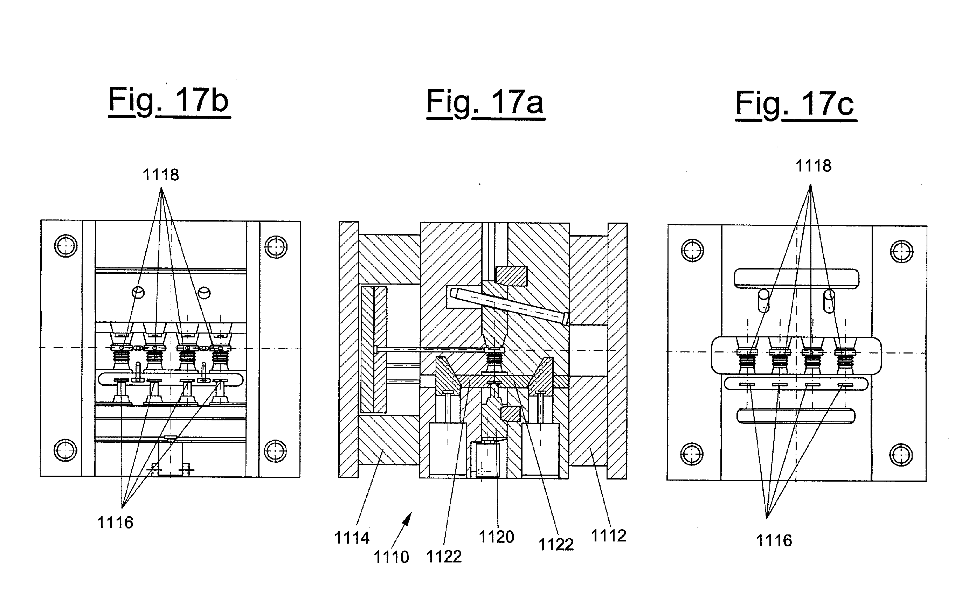

In figures 17a, 17b and 17c a twelfth embodiment of a mould 1110 according to the invention is illustrated, where the components which are the same as and/or equivalent to those illustrated in figures 1, 2 and 3 carry the same reference numerals increased by 1100. With this mould 1110 a valved cap is realised in which the chemical link between elastomer and perforated support is not desired and therefore the support shall be used as the base for a patella which acts as a valve. Such a finished piece is shown in figure 271.

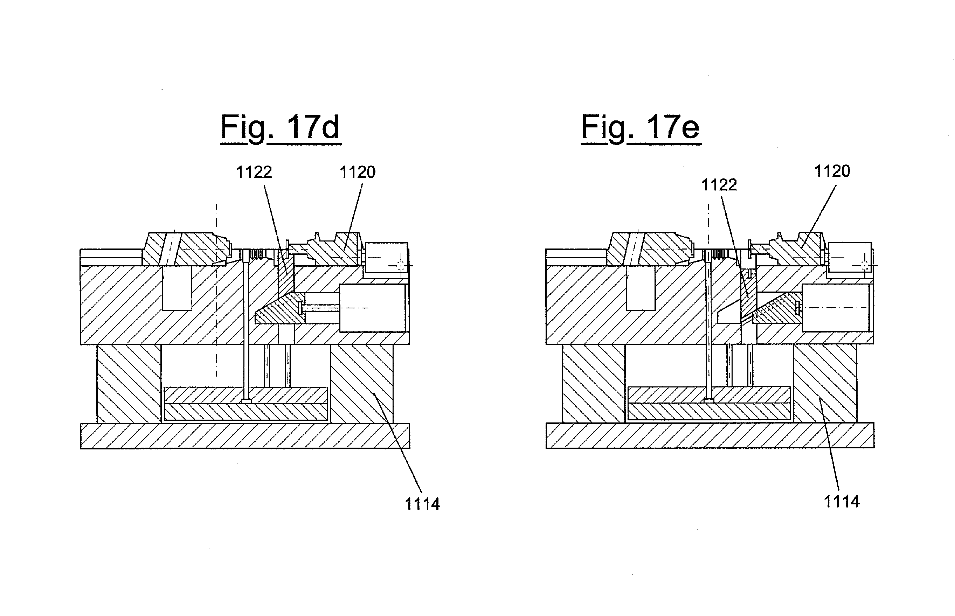

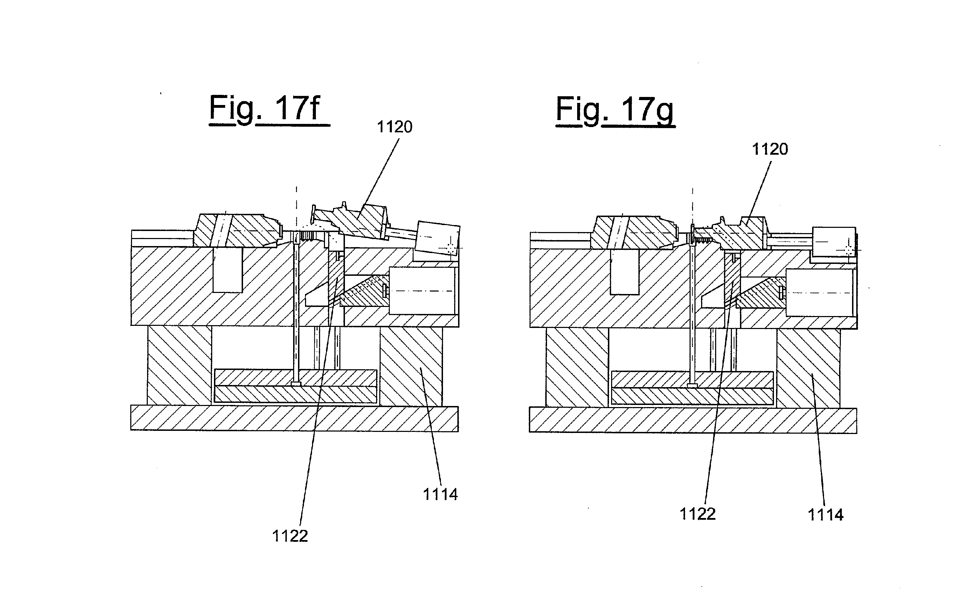

It should be noted how also in this case the finished product is realised in a simple manner if compared with that which is allowed by moulds for overmoulding of the prior art. At the kinematic level it is interesting to note that a trolley which conveys the first shot inside the second recess follows a non-linear movement so as to avoid collisions with the walls of the recess, as shown in the sequence of figures 17d, 17e, 17f and 17g.

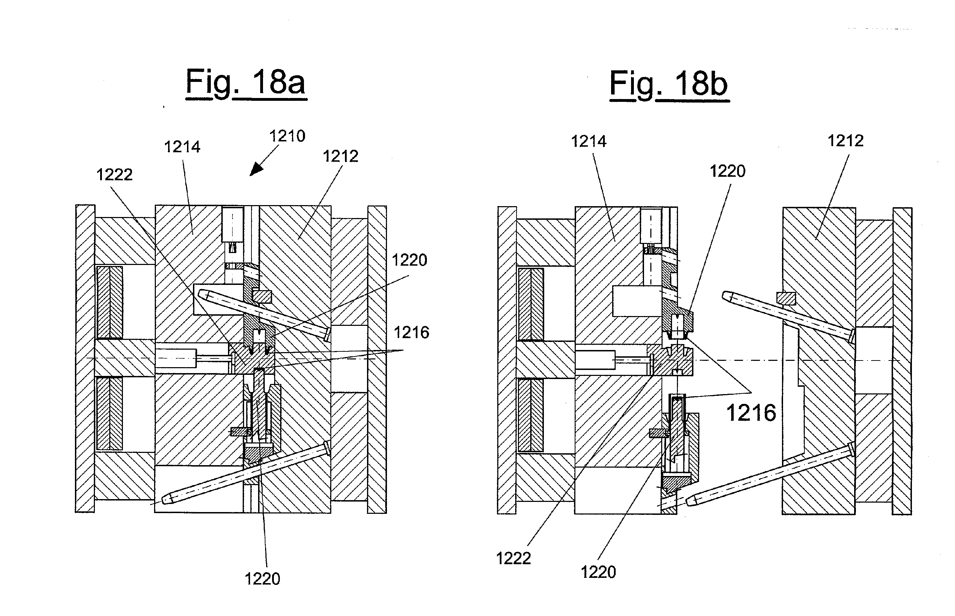

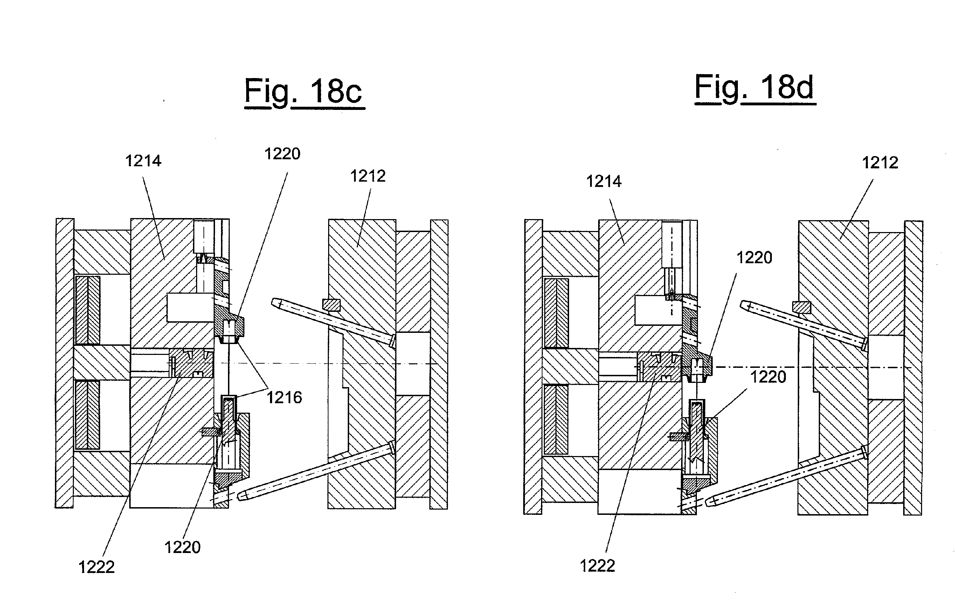

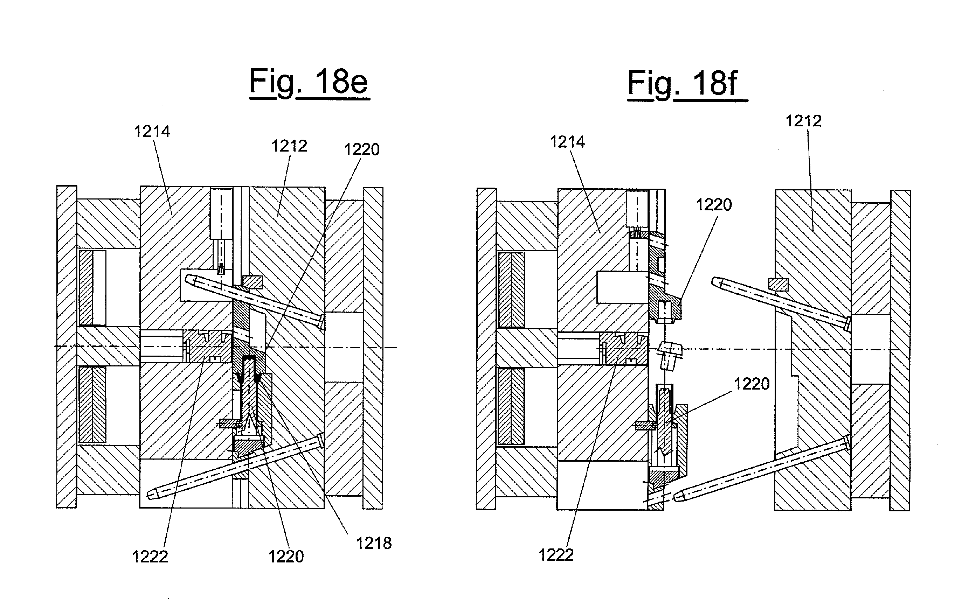

In figure 18a a thirteenth embodiment of a mould 1210 according to the invention is illustrated, where the components which are the same as and/or equivalent to those illustrated in figures 1, 2 and 3 carry the same reference numerals increased by 1200. With this mould 1210 a body with inner and outer gaskets of complex composition is realised: such a finished piece is shown in figure 27m. In this case sliding elements 1220 on which the gaskets are moulded in a first semi-cycle interpenetrate to be arranged for a second injection step, as can be seen in the sequence of figures 18b, 18c, 18d, 18e and 18f.

The replacement of the recess is ensured by the lowering of a descending core on which trolleys close. A trolley is moved by a column and the removal of the piece is ensured, in this case, by the stopping in telescope sequence. The second trolley is also moved by a tilted column and a jack takes care of the displacement for the change of stroke.

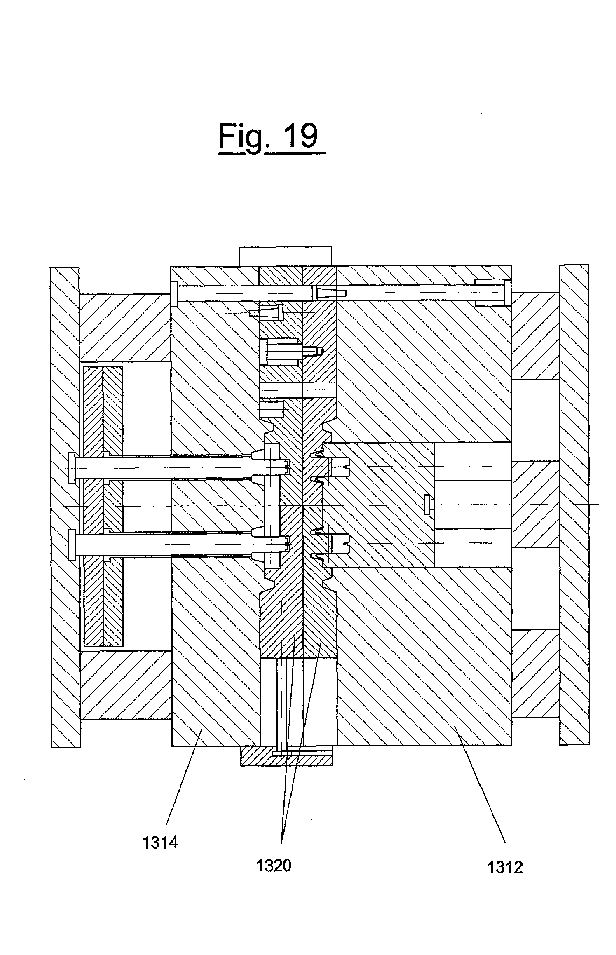

In figure 19 a fourteenth embodiment of a mould 1310 according to the invention according to the invention is illustrated, where the components which are the same as and/or equivalent to those illustrated in figures 1, 2 and 3 carry the same reference numerals increased by 1300. This mould 1310 is an alternative of the mould 1210 of figure 18a with positioning of the axis of the piece parallel to the axis of the press. The finished piece produced is shown in figure 27m.

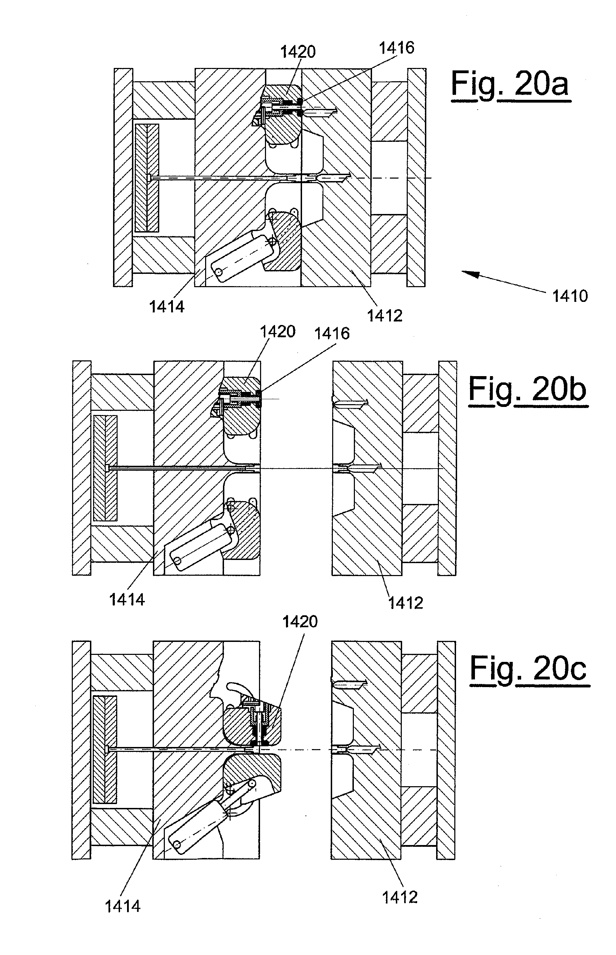

In figure 20a a fifteenth embodiment of a mould 1410 according to the invention is illustrated, where the components which are the same as and/or equivalent to those illustrated in figures 1, 2 and 3 carry the same reference numerals increased by 1400. With this mould 1410 a kinematism is realised, using non-chemically adhesive materials such as acetal POM and polyamide PA6.

Such a finished piece is shown in figure 27n.

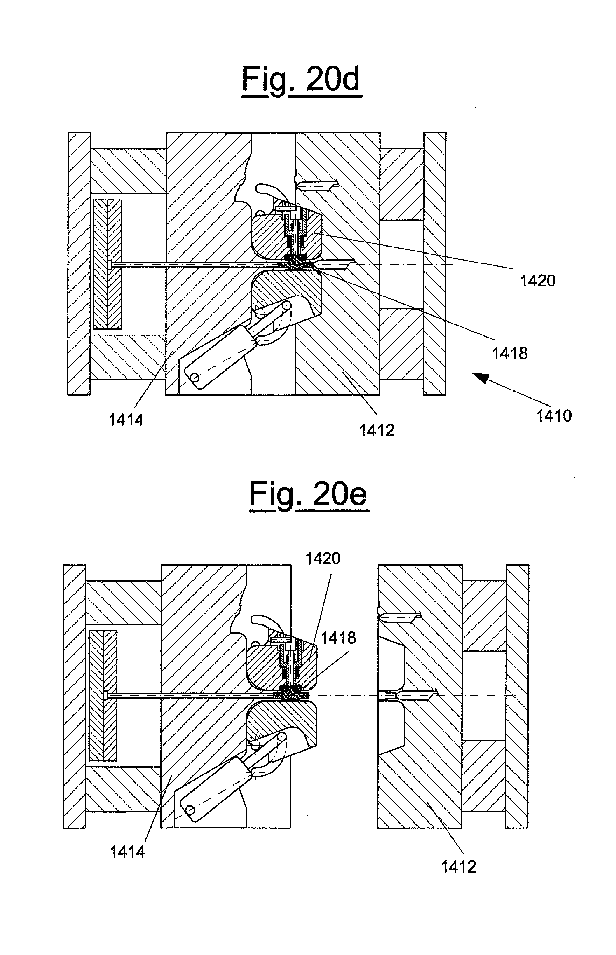

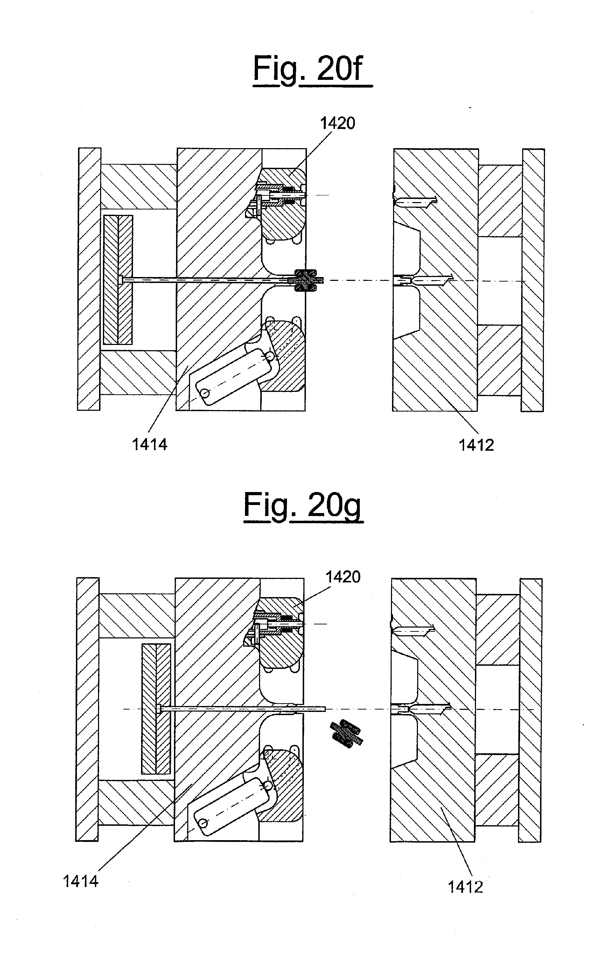

It should be noted how in such an example, sliding elements 1420 displace horizontally and vertically alternately, as can be seen in the succession of figures 20b, 20c, 20d, 20e, 20f and 20g.

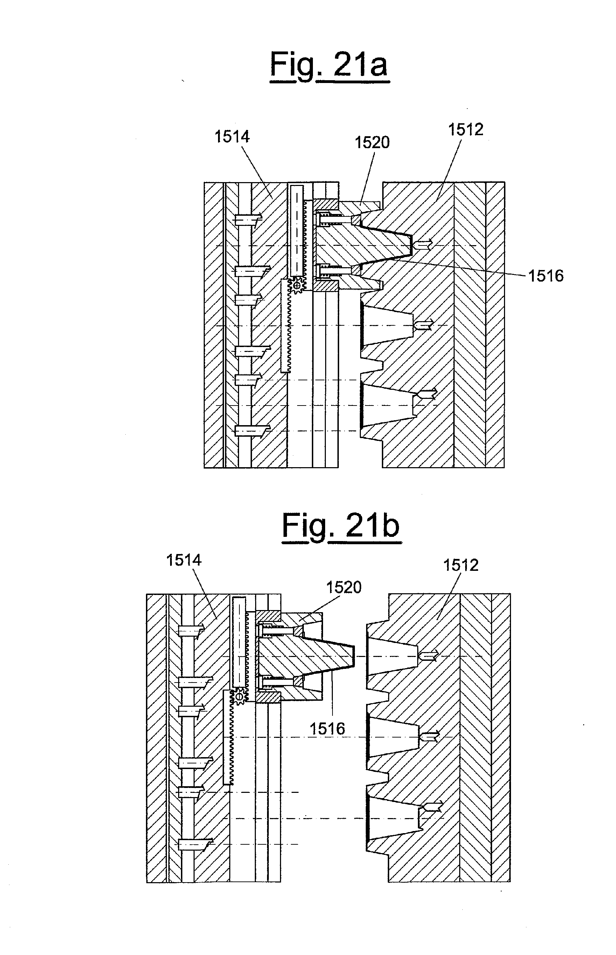

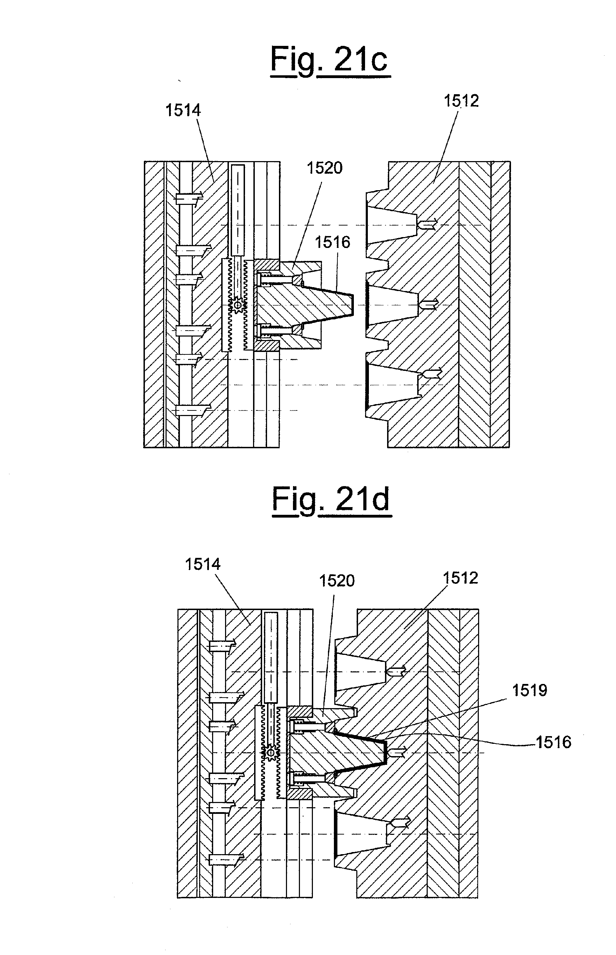

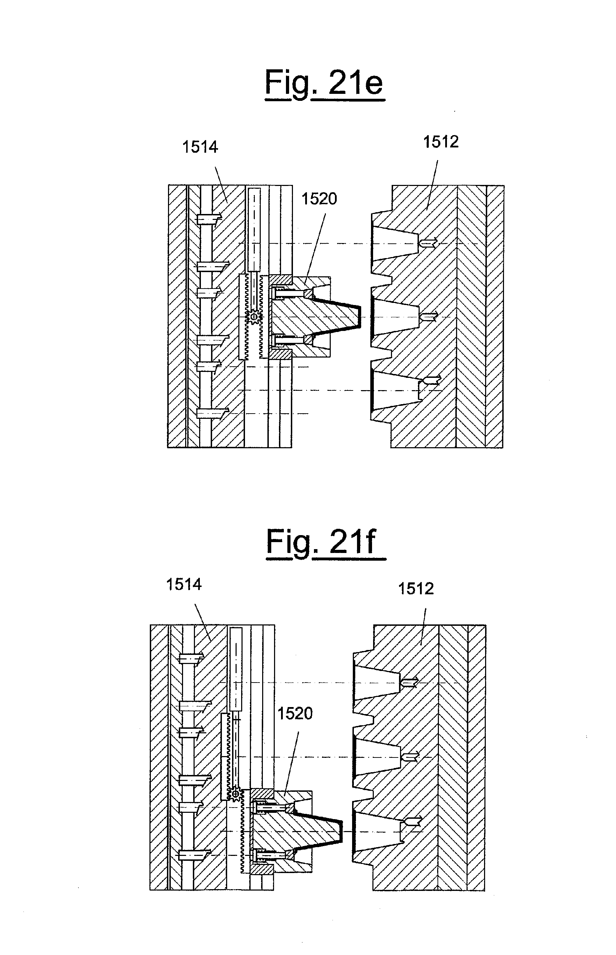

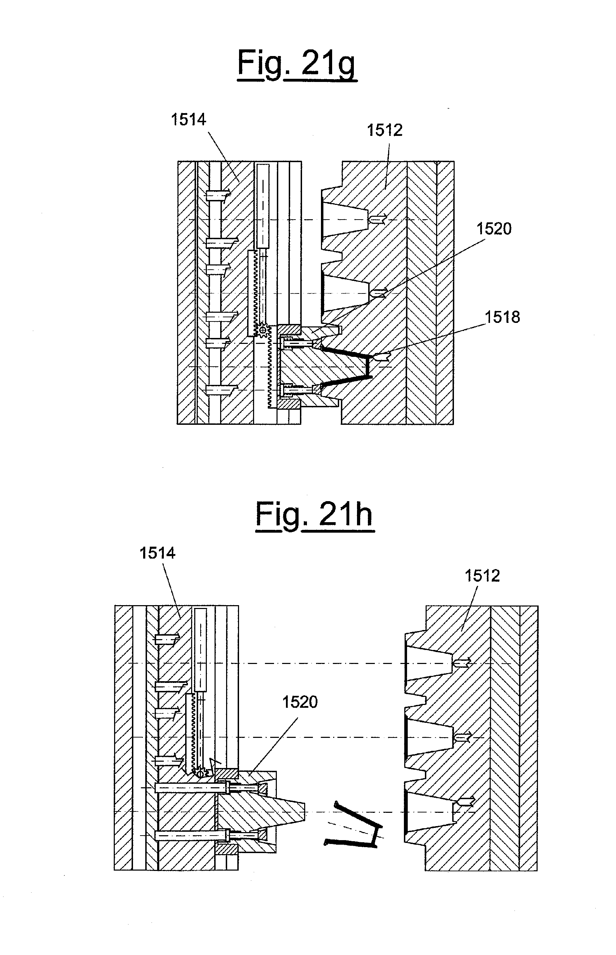

In figures 21a, 21b, 21c, 21d, 21e, 21f, 21g and 21h a sixteenth embodiment of a mould 1510 according to the invention is illustrated, where the components which are the same as and/or equivalent to those illustrated in figures 16a, 16b and 16c carry the same reference numerals increased by 500. In this case a sliding element 1520 comprises an impression part 1516 or 1518, so that such an impression 1516 or 1518 translates following one or more stages. At each stage an injection step or a different operation like labelling or other takes place.

In the example a three layered beaker is realised, shown in figure 27o.

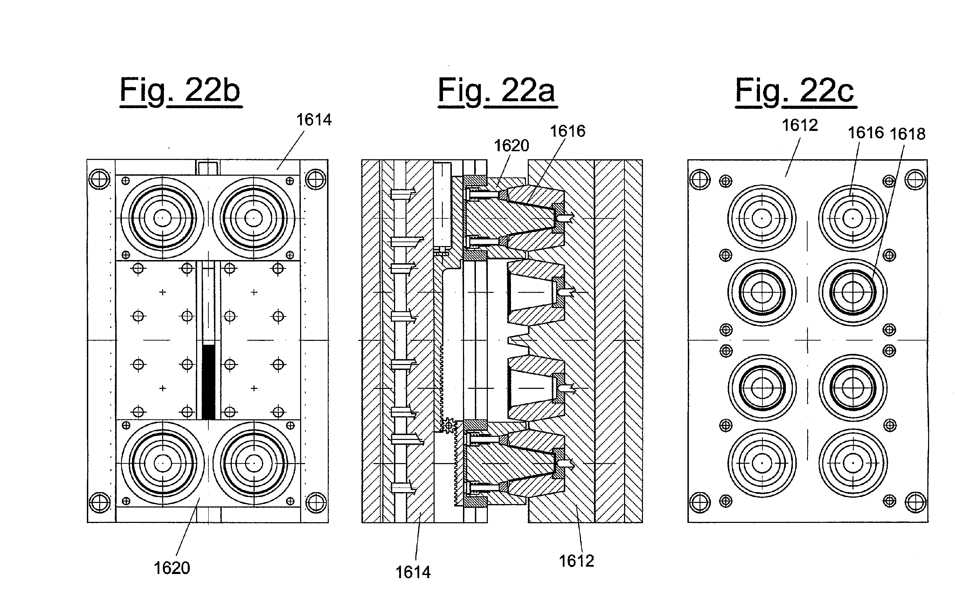

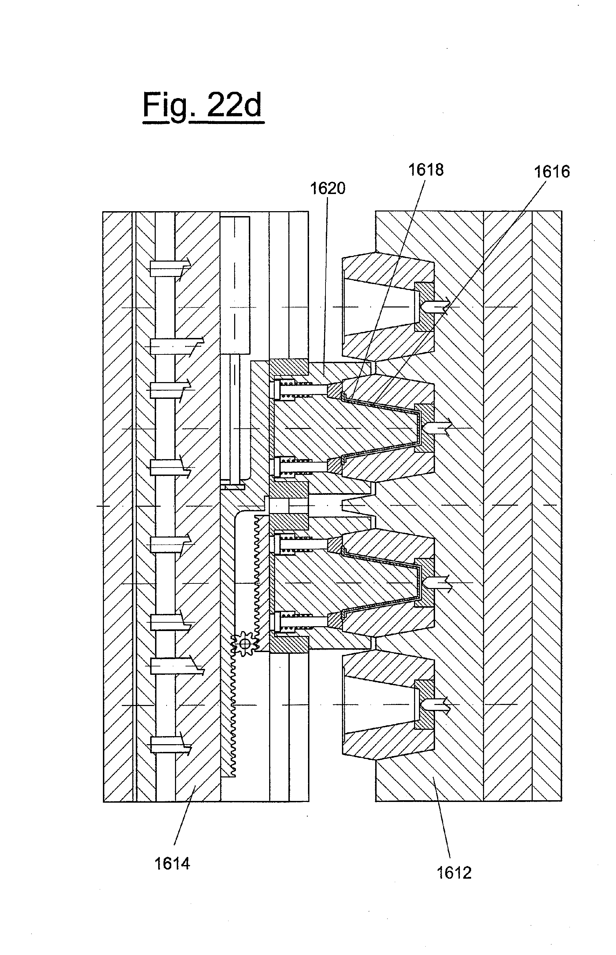

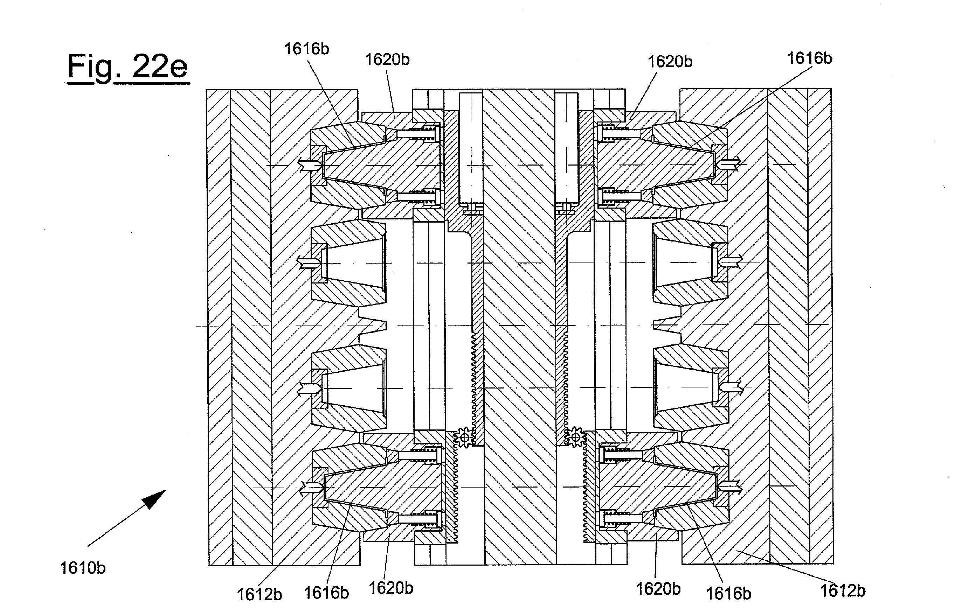

In figures 22a, 22b, 22c and 22d a seventeenth embodiment of a mould 1610 according to the invention is illustrated, where the components which are the same as and/or equivalent to those illustrated in figures 1, 2 and 3 carry the same reference numerals increased by 1600. With the mould 1610 pieces similar to those produced with the mould 1510 of figure 21a are realised, but more specifically the mould 1610 is balanced and translating with two increasing stages of the element. The finished piece produced is shown in figure 27p.

We would now like to give particular attention to this last application of the method according to the invention, carried out with the aforementioned mould 1610, given that it can advantageously alternatively be applied to cases in which one currently opts for the rotary mould.

In particular we wish to point out big advantages, productive and otherwise, with respect to the methods of the prior art.

In the example, for the sake of simplicity, we refer to a rubber beaker, but of course the example is not limiting and it could be any type of similar article.

A press for producing a determined article is chosen according to three fundamental rules which concern, in order of importance, the necessary closing force, the size of the mould and the capacity, for plastification and injection capacity, of the punching screws.

The prior art directs the production of such an item towards the use of a mould on a press with a rotary table in which to obtain two finished beakers for every cycle.

Clearly, in each cycle the two materials shall be injected simultaneously in such a way as to form two first shots and two second shots moulded over the first, to realise the finished product. In practice, the mould consists of four identical punchers which rotate cyclically and four identical dies in pairs wherein on the first two the first shots are generated and on the second pair of dies the rubber part and thus the finished beaker shall be obtained.

The necessary press must have a sufficient closing force to mould in the four recesses. The bulk of the mould is such as to be able to rotate on the table and between the columns of the press. The plastification screws must be sized so as to feed the sufficient material capacity for every moulding cycle. The mould usually obtainable tends to be unbalanced since one tends to divide the sequences into pairs each side of the mould, so as to feed them congruently with the screw intended for the injection step, and also for reasons of lifting or dropping of the pieces produced for every cycle.

Such a solution apparently seems extremely optimised since for every cycle finished pieces ready for extraction are obtained, and moreover the punching screws inject material in each cycle.

It should not be forgotten that, given that it is the press that rotates the half-mould, the necessary mould has a relatively low cost which can easily be made to have less impact over the number of pieces which have to be produced, of course compared to the use of a more expensive press.

Let us now analyse how the mould 1610 designed following the moulding method of the present invention is composed and what are the advantages which it offers.

The mould 1610 is mounted on a press without a rotary table. The mould 1610 comprises a fixed part 1612 formed from eight identical dies in sets of four of which those for second injection (although it could also be the opposite) occupy a central part of the mould 1610, whereas a mobile part 1614 is formed from four sliding elements 1620.

Such sliding elements 1620 comprise translating punchers in pairs so as to be able to converge or diverge simultaneously during opening in two semi-cycles. In the first semi-cycle, with the punchers 1620 apart, a body of the beaker is moulded injecting the first material in the four corresponding dies. In the second semi-cycle, after having clearly moved the punchers 1620 closer together, a rubber material is overmoulded on top.

At this point, after having opened the mould 1610 and removed the four finished pieces, the four punchers 1620 once again displace into separated position so as to be able to restart with an initial step.

The described mould 1610 conforms to needs and the press used. The necessary closing force is indicatively the same given that four impressions of the same size shall always be moulded in each injection of material even if with divided steps.

Not having to carry out rotations of the mould 1610, the necessary bulk will involve a press plane which is bigger but which does not create problems given that it must only satisfy the requirement of the passage size between the columns of the press.

Overall, the necessary plastification capacity, since the injection cycles are divided, is a less important prerogative even if such a method actually allows more plastic to be transformed in the unit of time: this is due to the fact that, to plastify more than double the amount of material, there is relatively more time available, in virtue of the fact that the punching and maintenance time of the material is cyclically less.

The moulding method which uses such a mould 1610 allows a more rational use of the press and a total balancing both of mass and of distribution of the forces in play.

The movement of the parts, indeed, concerns mass incomparable to the rotation system and thus involves low displacement times.

Clearly, to justify the investment of a relatively more expensive mould 1610, due to four necessary extra dies and the translating kinematisms, the productive advantages must be substantially big.

Let us now generally analyse a productive comparison of the two moulding methods, relative to the estimable transformation times.

With a rotary mould of the prior art there are the following times:
0.5 s for the injection of the first and second material;
10 s for the cooling of the injected material;
3.5 s for the opening of the mould, the removal, the rotation and the closing of the mould.

Therefore, the total time to produce two finished beakers is 14 s.

With the mould 1610 according to the invention, with translating and balanced sliding elements there are the following times:
0.75 s for the injection of the first material;
10 s for the cooling of such a material;
1.5 s for the opening of the mould 1610, the translation of the sliding element 1620 and the closing of the mould 1610 itself;
0.75 s for the injection of the second material;
10 s for the cooling of such a material;
3 s for the opening of the mould 1610, the removal of the finished pieces, the translation of the sliding element 1620 and the closing of the mould 1610 itself.

Therefore, the total time for producing four finished beakers is 26 s.

From this first comparison it emerges that it is just about more productive to realise a mould not of the rotary but translating type. This is thanks to the lesser time necessary for moving the parts. Such a difference is truly minimal and deserves a closer analysis, given that an extra 7% productivity and the already quoted advantages in terms of balancing and use of the press justify only in rare cases a greater amortisation given by the greater cost of the mould necessary.

From a deeper analysis, in reality, other important factors emerge which influence the productivity of the moulding method according to the invention:
- the preliminary analysis does not take into account that, in fact, the thicknesses and the capacity of the two materials used are never the same and thus require substantially different cooling times;
- during the first semi-cycle four dies shall alternatively remain disengaged and can cool down further: this allows a further decrease in the cycle time given that, once used, they cool down the shot quicker substantially decreasing the cycle time and, moreover, allow, with semi-crystalline polymers, the obtainment of a higher level of crystalinity, a characteristic sometimes desired on some manufactured products;
- the injection times, since the capacities are different, are also different.

Thus reconsidering the previous analysis in reasonable terms concerning the materials used, we can thus reconsider the times of the mould 1610 according to the invention in the following way:
0.75 s for the injection of the first material;
9.25 s the cooling of such a material;
1.5 s for the opening of the mould 1610, the translation of the sliding element 1620 and the closing of the mould 1610 itself;
0.5 s for the injection of the second material;
5 s for the cooling of such a material;
3 s for the opening of the mould 1610, the removal of the finished pieces, the translation of the sliding element 1620 and the closing of the mould 1610 itself.

Therefore, the total time for producing four finished beakers is 20 s.

In this case the difference between the mould 1610 according to the invention and the prior art seems substantial and there is a saving in terms of transformation time equal to 28% in favour of the method according to the invention with respect to the rotary mould normally applied.

It therefore becomes reasonable to invest in tools of this type since the amortisation on the number of pieces can boast a considerable difference in terms of transformation cost.

It seems clear that such a productive method is all the more preferable the greater the difference in terms of capacity and thickness between the materials to be injected.

Moreover, reconsidering the same configuration of the mould 1610 this time not to produce beakers but for example containment boxes with high-thickness walls equipped with a perimetric gasket, we can thus compare the estimation between the two productive methods.

With a rotary mould of the prior are there are the following times:
2 s for the injection of the first and of the second material;
28 s for the cooling of the injected material;
4 s for the opening of the mould, the removal, the rotation and the closing of the mould.

Therefore, the total time to produce two finished containment boxes is 34 s.

With the mould 1610 according to the invention, with translating and balanced sliding elements there are the following times:
2.5 s for the injection of the first material;
26 s for the cooling of such a material;
1.5 s for the opening of the mould 1610, the translation of the sliding element 1620 and the closing of the mould 1610 itself;
1 s for the injection of the second material;
8 s for the cooling of such a material;
3.5 s for the opening of the mould 1610, the removal of the finished pieces, the translation of the sliding element 1620 and the closing of the mould 1610 itself.

Therefore, the total time to produce four finished containment boxes is 42.5 s.

In this case the difference in production time is considerable and there is a saving in terms of transformation time equal to 37% in favour of the method according to the invention with respect to the rotary mould of the prior art.

The substantial productivity, together with the technical advantages of exploitation of the press and of balancing thus makes it truly important to invest in tools of this type.

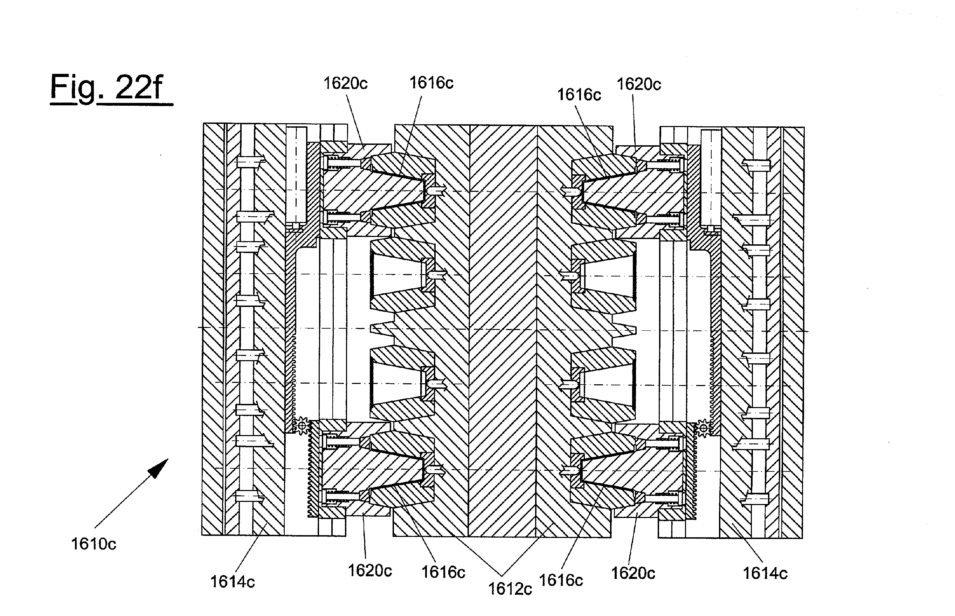

In figures 22e and 22f a further two alternative embodiments of the mould 1610 of figure 22a are shown, where the components which are the same as and/or equivalent to those illustrated in figure 22a carry the same reference numerals respectively followed by the suffix b and c. Such moulds 1610b and 1610c realise the same method carried out by the mould 1610, but in these last two cases the moulds 1610b and 1610c are of the so-called "stack" type: in the prior art this term indicates double or multiple moulds, i.e. formed from three or more moulding planes.

More precisely, the mould 1610b has a central moulding plane equipped with dies, whereas in the case of the mould 1610c in the central moulding plane there are punchers.

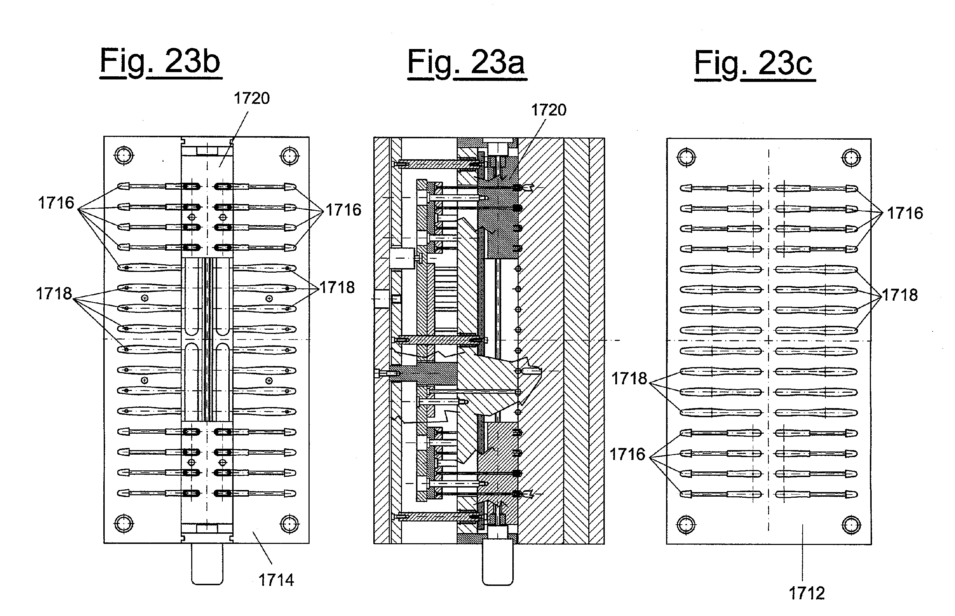

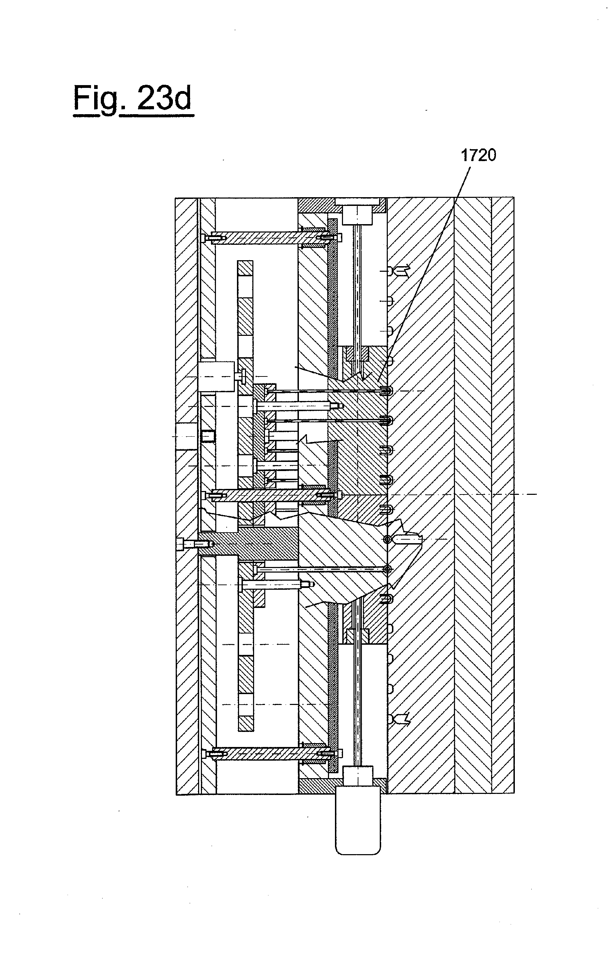

In figures 23a, 23b, 23c and 23d an eighteenth embodiment of a mould 1710 according to the invention is illustrated, where the components which are the same as and/or equivalent to those illustrated in figures 1, 2 and 3 carry the same reference numerals increased by 1700. With the mould 1710, which in practice is a further development of the mould 1610 of figure 22a, a toothbrush body is realised. Such a finished piece is shown in figure 27q.

The mould 1710 is multi-impression and is equipped with a double table device which follows an impression which in turn translates on a guide connected to a first table. To limit the inertial stresses of the masses of the displaced impressions, a screw is used actuated by a motor instead of by a jack as can happen, on the other hand, in the previous examples.

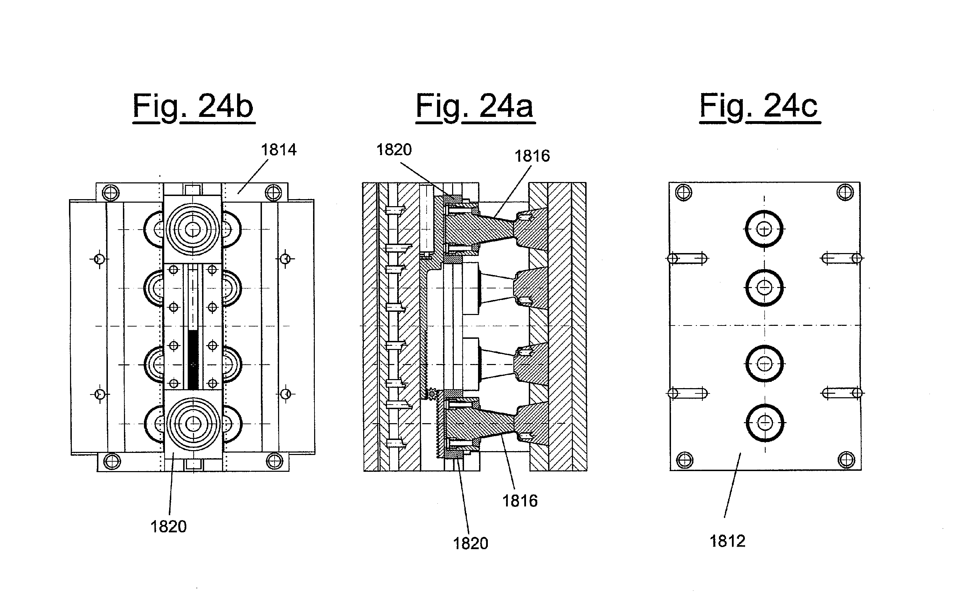

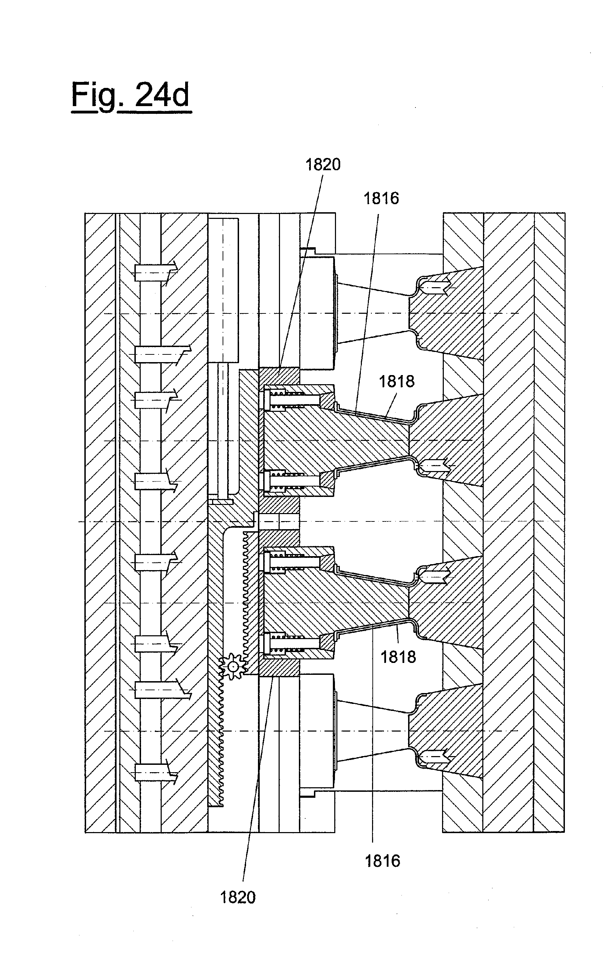

In figures 24a, 24b, 24c and 24d a nineteenth embodiment of a mould 1810 according to the invention is illustrated, where the components which are the same as and/or equivalent to those illustrated in figures 1, 2 and 3 carry the same reference numerals increased by 1800. In the mould 1810 the translation takes place between the elements. The finished piece produced is shown in figure 27r.

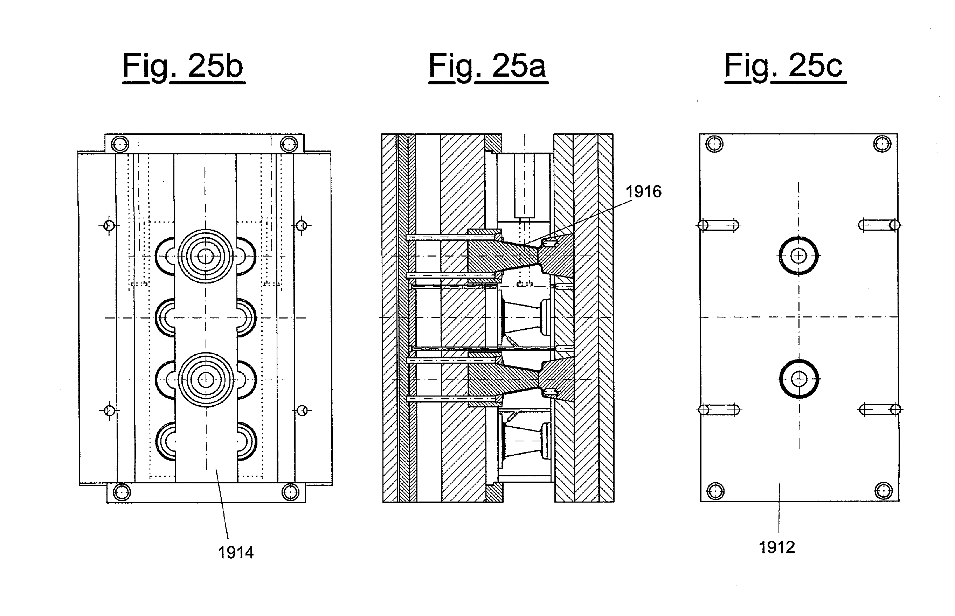

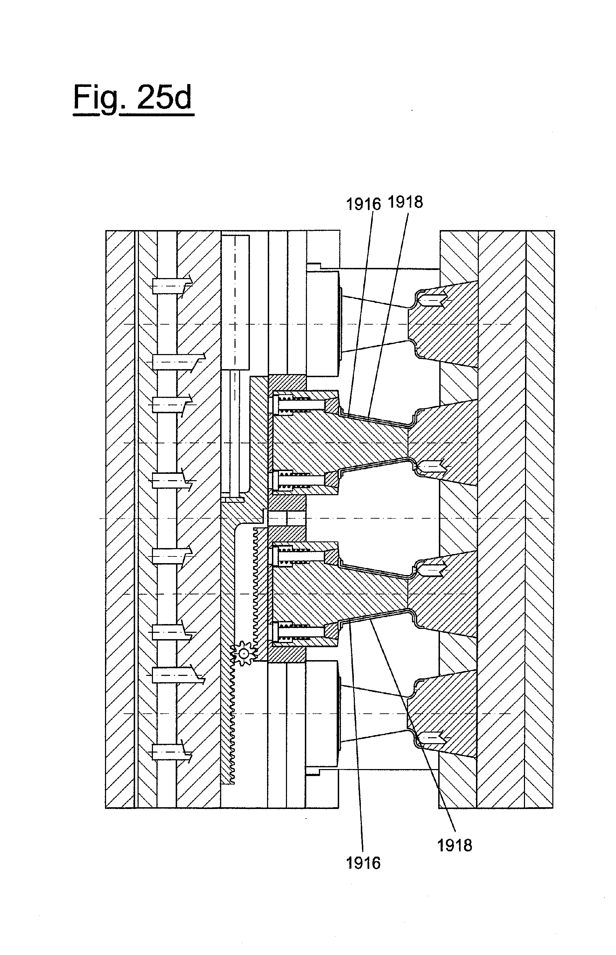

In figures 25a, 25b, 25c and 25d a twentieth embodiment of a mould
1910 according to the invention is illustrated, where the components which are the same as and/or equivalent to those illustrated in figures 1, 2 and 3 carry the same reference numerals increased by 1900. The mould 1910 is similar to the mould 1810 of figure 24a, but in this case steps are taken to translate impressions linked to trolleys instead of puncher impressions. The finished piece produced is shown in figure 27r.

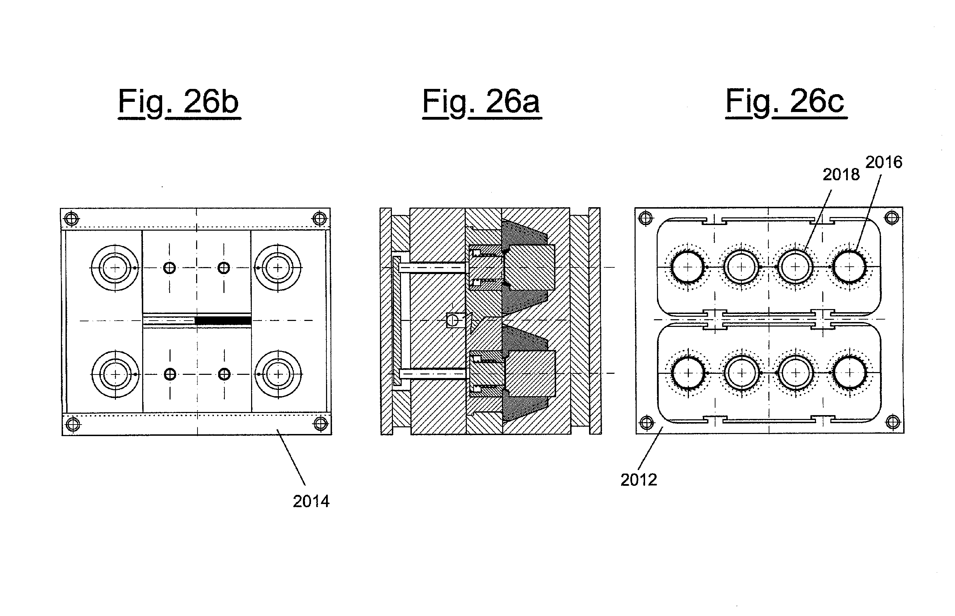

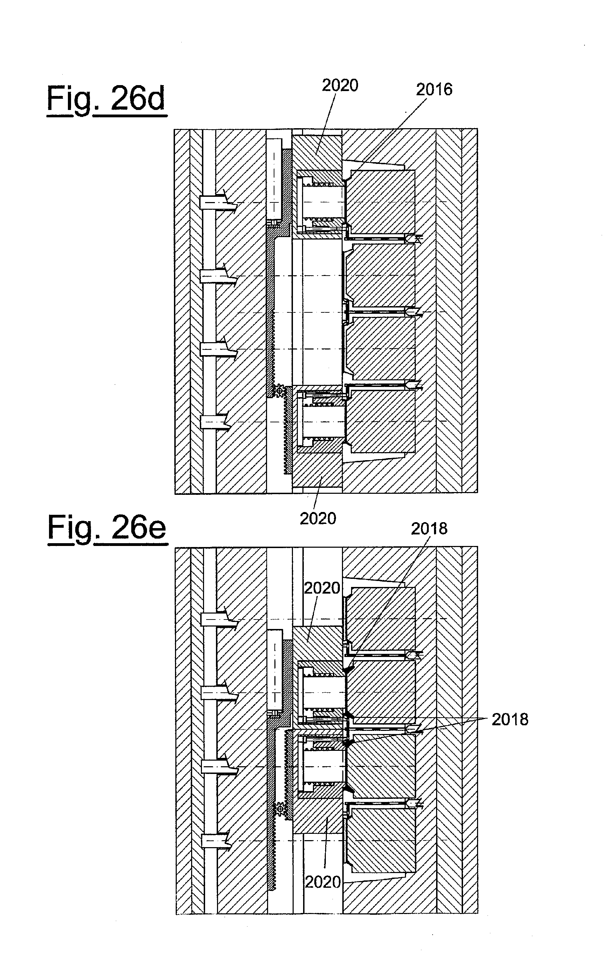

In figures 26a, 26b, 26c, 26d and 26e a twenty-first embodiment of a mould 2010 according to the invention is illustrated, where the components which are the same as and/or equivalent to those illustrated in figures 1, 2 and 3 carry the same reference numerals increased by 2000. In the mould 2010 the elements remain connected to the fixed part of the mould. The finished piece produced is shown in figure 27t.

Basically, the moulding method of the present invention tends to move, mainly, the parts of partial impressions through movements which convey a first shot into a position suitable for receiving a second injection cycle. Such a cycle can be in two or more sequences and always between the sequences a displacement takes place helping to make the end piece grow by overmoulding.

Moreover, it should be noted how the method according to the invention can be divided for macro regions of the mould, thus creating growing islands which at a certain point can also generate the end product between them.

At the kinematic level, therefore, the substantial difference of the present method with respect to the panorama of existing methods is that an entire semi-mould or fundamental group of the tool will not move but individual impression parts constituting the end piece; or else, individual groups of impressions translate with stages necessary for the sequential growth and are commanded by kinematisms totally inside the tool.

We would now like to highlight that, forgetting the individual applications and the details of the individual cases, it seems clear that the moulding method according to the invention becomes extremely important amongst the realisation and design methods of the tools used for the construction of pieces made up of many overmoulded and/or multicomponent materials.

From the description which has been made the characteristics of the moulding method, carried out by a mould for a conventional injection press, suitable for cost-effectively realising a piece in one or more injectable materials, and of the relative mould for such a method object of the present invention, are clear just as the relative advantages are also clear, amongst which we recall:
- production costs of the finished details substantially lower with respect to the prior art;
- the masses of the mould in movement are minimal and therefore the displacements necessary for the growth of the piece are faster and more agile;
- the mould is perfectly balanced by mass, injection and forces applied on the press;
- with the method according to the invention the impressions are not cyclically replaced, thus making a number of openings and closures of the mould equal to the necessary growth sequences necessary;
- the method tends to realise some of the types of pieces currently realised with known methods in a more productive manner (more pieces per hour) in particular in relation to the rotary mould;
- the method tends to realise some of the types of pieces currently realised with known methods with less complex and expensive moulds and in particular with rotary moulds with kinematisms inside the tool and with moulds with sliding back which make part of the recess accessible;
- the method allows some types of pieces which are difficult to realise with known methods, if not, as seen, pieces actually unable to be realised with the prior art to be realised advantageously;
- the moulding method according to the invention is also useful for realising pieces in polymeric materials not compatible with each other: in such a way it is possible to obtain not individual pieces but groups of pieces mounted together and constituting a complex object like, for example, kinematisms or other;
- the method requires just a common injection press uniquely equipped with a management unit suitable for the management of the signals to be communicated with the moulding tool and equipped with injection groups necessary for obtaining the piece: in practice, the method makes the type of press have no influence upon the complexity of the mould;
- the method is an open system suitable for being implemented and/or supported by the multiple types of mould already existing and by the numerous miscellaneous functions normally outside the tool like for example setting, in some sequences, inserting, labelling, tampography operations, etc.;
- the method lends itself to overmoulding pieces realised also with water-soluble materials like for example polyvinyl alcohol PVAL, in order to obtain pieces otherwise not able to be realised, which are hollow or interpenetrating;
- with the method of the present invention there is substantial possibility of developing and engineering new products with improved characteristics;
- possibilities of large design revisions of the pieces realised with known methods and of pieces not currently designed because they are unable to be realised with the prior art.

Finally, it is clear that the moulding method, carried out by a mould for a conventional injection press, suitable for cost-effectively realising a piece in one or more injectable materials and the relative mould for such a method thus conceived are susceptible to numerous modifications and variants, all of which are covered by the invention; moreover, all of the details can be replaced with technically equivalent elements. In practice, the materials used, as well as the shapes and sizes, can be whatever according to the technical requirements.

The scope of protection of the invention is therefore defined by the attached claims.

## Claims

1. Moulding method, carried out by a mould for a conventional injection press, suitable for cost-effectively realising a piece in one or more injectable materials, said mould comprising a mobile part, fixed to a mobile side of said press, and a fixed part, fixed to a fixed side of said press, on said mobile and fixed parts being realised respective impressions, in various number and configuration, which define, when said mobile part is closed against said fixed part, recesses suitable for receiving said injectable materials in at least two successive injection steps, **characterised in that** it comprises the following steps:
- a step of housing a sliding element in at least a first of said recess;
- a first injection step in said first recess, after which a first part of said piece remains fixed on a surface integral to said sliding element;
- a displacement step of said first part of this piece in a second recess, through translating movement of said sliding element with respect to said fixed part of the mould;
- a second injection step in said second recess.

2. Moulding method according to claim 1, **characterised in that** said integral surface is an outer surface of said sliding element.

3. Moulding method according to claim 1, **characterised in that** said integral surface comprises an insert.

4. Moulding method according to claim 1, **characterised in that** it comprises steps for carrying out various operations complementary to the moulding operation, such as inserting, labelling, tampography or other.

5. Moulding method according to claim 1, **characterised in that** it comprises further injection steps in further recesses.

6. Mould (10; 110; 210; 310; 410; 510; 610; 710; 810; 910; 1010; 1110; 1210; 1310; 1410; 1510; 1610; 1610b; 1610c; 1710; 1810; 1910; 2010) for a conventional injection press, suitable for cost-effectively realising a piece in one or more injectable materials, of the type comprising a mobile part (14; 114; 214; 314; 414; 514; 614; 714; 814; 914; 1014; 1114; 1214; 1314; 1414; 1514; 1614; 1614b; 1614c; 1714; 1814; 1914; 2014), fixed to a mobile side of said press, and a fixed part (12; 112; 212; 312; 412; 512; 612; 712; 812; 912; 1012; 1112; 1212; 1312; 1412; 1512; 1612; 1612b; 1612c; 1712; 1812; 1912; 2012), fixed to a fixed side of said press, on said mobile (14; 114; 214; 314; 414; 514; 614; 714; 814; 914; 1014; 1114; 1214; 1314; 1414; 1514; 1614; 1614b; 1614c; 1714; 1814; 1914; 2014) and fixed (12; 112; 212; 312; 412; 512; 612; 712; 812; 912; 1012; 1112; 1212; 1312; 1412; 1512; 1612; 1612b; 1612c; 1712; 1812; 1912; 2012) parts being realised respective impressions, in various number and configuration, which define, when said mobile part is closed against said fixed part, recesses (16, 18; 116, 118; 216, 218; 316, 318; 416, 417, 418; 5i6, 518; 616, 618; 716, 718; 816, 818; 916, 918; 1016, 1018, 1019; 1116, 1118; 1216, 1218; 1316, 1318; 1416, 1418; 1516, 1518; 1616, 1618; 1616b, 1.618b; 1616c, 1618c; 1716, 1718; 1816, 1818; 1916, 1918; 2016, 2018) suitable for receiving said injectable materials in at least two successive injection steps, **characterised in that** at least a first of said recesses (16; 116; 216; 316; 416; 516; 616; 716; 816; 916; 1016; 1116; 1216; 1316; 1416; 1516; 1616; 1616b; 1616c; 1716; 1816; 1916; 2016), where a first injection step takes place, comprises a sliding element (20; 120; 220; 320; 420; 520; 620; 720; 820; 920; 1020; 1120; 1220; 1320; 1420; 1520; 1620; 1620b; 1620c; 1720; 1820; 1920; 2020), on a surface integral with said sliding element a first part (56; 156; 256; 356; 456; 556; 656; 756; 856; 956; 1056; 1156; 1256; 1356; 1456; 1556; 1656; 1756; 1856; 1956; 2056) of said piece remaining fixed, said first part (56; 156; 256; 356; 456; 556; 656; 756; 856; 956; 1056; 1156; 1256; 1356; 1456; 1556; 1656; 1756; 1856; 1956; 2056) of said piece being successively carried by said sliding element (20; 120; 220; 320; 420; 520; 620; 720; 820; 920; 1020; 1120; 1220; 1320; 1420; 1520; 1620; 1620b; 1620c; 1720; 1820; 1920; 2020), equipped with translating movement with respect to said fixed part of said mould, in a second of said recesses (18; 118; 218; 318; 418; 518; 618; 718; 818; 918; 1018; 1118; 1218; 1318; 1418; 1518; 1618; 1718; 1818; 1918; 2018), where a second injection step takes place.

7. Mould (10) according to claim 6, **characterised in that** said recesses (16, 18) are four in number, **in that** said elements (20) are two in number and are equipped with translating movement along an axis substantially perpendicular to a longitudinal axis of the mould (10).

8. Mould (10) according to claim 7, **characterised in that** it realises a piece such as a sleeve with inner gaskets, said first parts (56) of finished piece, formed in said first recesses (16), being said gaskets, said first recesses (16) being defined by an outer support of inserts (22) on said sliding elements (20) .

9. Mould (10) according to claim 8, **characterised in that** said gaskets are in thermoplastic elastomer.

10. Moulding method carried out by a mould (10) according to claim 9, **characterised in that** it comprises the following steps:
- a first injection step of an injectable material in said first recesses (16), to realise inner gaskets;
- a cooling step of said injected material;
- a step of opening said mould 10;
- a removal step of feedheads with extractors and an opening step of inserts (22) which formed said first recesses (16) ;
- a re-entry step of said extractors and a displacement step of said sliding elements (20), to define said second recess (18);
- a second injection step of an injectable material in said second recess (18), which takes place after having previously closed said mould (10);
- a cooling step of said material injected into said second recess (18);
- a step of opening said mould 10;
- a displacement of said sliding elements (20) to return to an initial position;
- removal of feedheads and of said finished piece;
- an advancing step of said inserts (22) and of sliding back of said extractors;
- a closing step of said mould (10), which coincides with a start of cycle step.

11. Method according to claim 10, **characterised in that** said sliding elements (20) are mounted on sliding trolleys, where said trolleys slide back slipping off said sliding elements (20) from said gaskets.

12. Mould (110) according to claim 6, **characterised in that** it realises a piece such as a sleeve with six inlets.

13. Mould (210) according to claim 6, **characterised in that** it realises a body equipped with an inner gasket similar to a sealed container.

14. Mould (310) according to claim 6, **characterised in that** it realises a sleeve in series, able to be realised in very small sizes and similar to an aid to sealably join tubes or electrical wires.

15. Mould (410) according to claim 6, **characterised in that** it realises a sleeve in five parts, of said sleeve being firstly, in a first semi-cycle, moulded gaskets in first recesses (416) and a central part in further recesses (417), in the subsequent semi-cycle said central parts being conveyed through a guided insert (421), where said further recesses (417) are housed, said insert (421) being connected to a table in a subsequent position near to said second recesses (418).

16. Mould (410) according to claim 15, **characterised in that** on said gaskets, pressed against a central part of said sleeve, parts are overmoulded which stably connect components, the sleeve being kept empty inside.

17. Mould (510) according to claim 6, **characterised in that** it realises a curved shaped sleeve,

18. Mould (610) according to claim 6, **characterised in that** it realises a curved sleeve obtained from many overmoulded shots.

19. Mould (710) according to claim 6, **characterised in that** it realises a flat surface equipped with side gaskets, in a first step perimetric pieces being moulded and in a second step said flat surface being moulded.

20. Mould (810) according to claim 6, **characterised in that** it realises a flat surface having a framed box-shaped structure.

21. Mould (810) according to claim 20, **characterised in that** perimetric parts of said flat surface have a complex shape and a non-constant section.

22. Mould (910) according to claim 6, **characterised in that** it realises a distributor equipped with relative gaskets.

23. Mould (1010) according to claim 6, **characterised in that** it realises an eyeglass frame complete with arms and relative hinges with elastic joints, said sliding element (1020) taking up three different positions to realise in succession said first recess (1016), a further recess (1019) and said second recess (1018).

24. Mould (1010) according to claim 23, **characterised in that** it also actuates an injection step to realise lenses.

25. Mould (1010) according to claim 24, **characterised in that** said lenses are made from poly(methyl metacrylate) PMMA.

26. Mould (1110) according to claim 6, **characterised in that** it realises a valved cap, wherein a support serves as a base for a patella which acts as a valve, a trolley which conveys a first shot inside said second recess (1118) follows a non-linear movement so as to avoid collisions with walls of said recess (1118).

27. Mould (1210) according to claim 6, **characterised in that** it realises a body with inner and outer gaskets of complex composition, wherein said sliding elements (1220), on which gaskets are moulded in a first semi-cycle, interpenetrate to be arranged for a second injection step, a replacement of recesses being ensured by a lowering of a descending core on which trolleys close.

28. Mould (1210) according to claim 27, **characterised in that** a trolley is moved by a column and a removal of a finished piece is ensured by stopping in telescope sequence, a second trolley being moved by a tilted column where a jack takes care of a displacement for a change of stroke.

29. Mould (1310) according to claim 6 or 27, **characterised in that** a positioning of an axis of a piece is parallel to an axis of the press.

30. Mould (1410) according to claim 6, **characterised in that** it realises a kinematism, using non-chemically adhesive materials, said sliding elements (1420) alternatively displacing horizontally and vertically.

31. Mould (1510) according to claim 6, **characterised in that** said sliding element (1520) comprises an impression part (1516, 1518), so that said impression (1516, 1518) translates following one or more stages.

32. Mould (1510) according to claim 31, **characterised in that** for each of said stages an injection step or a different operation like labelling or other takes place.

33. Mould (1510) according to claim 31, **characterised in that** it realises a three-layer beaker.

34. Mould (1610) according to claim 31, **characterised in that** it is balanced and translating with two growing stages of a finished product.

35. Mould (1610) according to claim 34, **characterised in that** said fixed part (1612) includes eight identical dies in sets of four of which those for injection occupy a central part of said mould (1610), said mobile part (1614) comprising four of said sliding elements (1620).

36. Mould (1610) according to claim 35, **characterised in that** said sliding elements (1620) comprise translating punchers in pairs so as to converge or diverge simultaneously during an opening between two semi-cycles.

37. Mould (1610) according to claim 36, **characterised in that** in a first semi-cycle, with said punchers (1620) apart, a body of a beaker is moulded injecting a first material in four corresponding dies, in a second semi-cycle, after having moved together said punchers (1620), a rubber material is overmoulded on top.

38. Mould (1610) according to claim 37, **characterised in that**, after having opened said mould (1610) and removed said four finished pieces, the four punchers (1620) once again displace in a position distanced from each other to successively restart with an initial step.

39. Mould (1610b; 1610c) according to claim 34,
**characterised in that** it is of the so-called "stack" type, formed from three or more moulding planes.

40. Mould (1610b) according to claim 39, **characterised in that** it has a central moulding plane equipped with dies.

41. Mould (1610c) according to claim 39, **characterised in that** it has a central moulding plane equipped with punchers.

42. Mould (1710) according to claim 31, **characterised in that** it realises a body of a toothbrush.

43. Mould (1710) according to claim 42, **characterised in that** it is equipped with a double table device which follows an impression which in turn translates on a guide connected to a first table.

44. Mould (1710) according to claim 43, **characterised in that** a screw is used actuated by a motor.

45. Mould (1810) according to claim 31, **characterised in that** said translation takes place between elements.

46. Mould (1910) according to claim 31, **characterised in that** impression translate linked to trolleys.

47. Mould (2010) according to claim 31, **characterised in that** elements remain connected to said fixed part {2012) of said mould (2010).
